(19) **Europäisches Patentamt / European Patent Office / Office européen des brevets**

(11) **EP 4 583 740 B1**

(12) **EUROPEAN PATENT SPECIFICATION**

(45) Date of publication and mention
of the grant of the patent:
**22.07.2026 Bulletin 2026/30**

(21) Application number: **23772920.7**

(22) Date of filing: **06.09.2023**

(51) International Patent Classification (IPC):
*A45D 1/06* (2006.01)     *A45D 20/12* (2006.01)
*A45D 2/00* (2006.01)     *A45D 1/28* (2006.01)
*A24F 40/46* (2020.01)     *H02J 7/34* (2006.01)

(52) Cooperative Patent Classification (CPC):
**A45D 20/12; A45D 1/06; A45D 1/28; A45D 2/001; H02J 7/34; H02J 7/345**

(86) International application number:
**PCT/GB2023/052303**

(87) International publication number:
**WO 2024/052672 (14.03.2024 Gazette 2024/11)**

(54) **PORTABLE APPARATUS AND ASSOCIATED METHODS**

TRAGBARES GERÄT UND ZUGEHÖRIGE METHODEN

APPAREIL PORTABLE ET MÉTHODES ASSOCIÉES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **06.09.2022 GB 202213020**

(43) Date of publication of application:
**16.07.2025 Bulletin 2025/29**

(60) Divisional application:
**26183433.7 / 4 779 841**

(73) Proprietor: **Jemella Limited**
**London W1D 3SP (GB)**

(72) Inventors:
• **NORFOLK, Andrew**
**London Greater London W1D 3SP (GB)**
• **KING, George**
**London Greater London W1D 3SP (GB)**

(74) Representative: **Mathys & Squire**
**32 London Bridge Street**
**The Shard**
**London SE1 9SG (GB)**

(56) References cited:
**WO-A1-2021/122801     WO-A1-2022/090172
AU-A1- 2017 393 026     US-A1- 2018 140 011
US-B1- 9 526 311**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the Invention

The present invention relates to portable devices that use power derived from a power source (for example, a battery of the device). The invention has particular, but not exclusive, relevance to hair styling and/or hair drying devices that output heat for drying or styling hair. Such drying and styling of the hair may be performed by a user in respect of their own hair, for example, or by a hair stylist.

### Background to the Invention

There are many types of portable devices that use power derived from a battery or power supply unit of the device. These devices include, for example, hair stylers, heated brushes, hair curlers, e-cigarettes, hot glue guns, soldering irons, and clothes irons.

Heated hair styling tools use heat to increase the temperature of hair to a desired styling temperature. A hair straighter having a heated plate applies heat directly via conduction to heat the hair of a user, which may be either wet or dry, to achieve a desired hair temperature for styling. The hair may be heated to a temperature that is particularly suitable for styling hair (for example, to or beyond a glass transition phase temperature). Similarly, a heated brush or curler can also be used to style hair by heating the hair to a temperature suitable for styling.

The expressions "to dry hair", "drying hair" or "decrease a moisture level of hair" and the like, as used herein, can refer both to the removal of "unbound" water that exists on the outside of hair when wet, or the removal of "bound" water, which exists inside individual hairs, and which can be interacted with when heat styling hair. The "bound" water need not necessarily be removed when drying hair, although removal of some bound water may occur during a drying or styling process. It should also be noted that the term "wet" as used in the present disclosure should be interpreted broadly, to encompass not only hair wetted by water, but also hair wetted by liquids other than water. For example, hair may be wetted by a solvent-based colourant, which the invention may be used to dry and/or style.

There is also a desire for cordless battery-powered devices to have improved run-times, whilst minimising any corresponding increases in the size and weight of the device. One way to increase the run-time is to provide a higher capacity battery, for example by using an alternative type of cell chemistry. However, there is a problem that higher capacity batteries often have a lower maximum power output (and a corresponding lower maximum current rating), which may be lower than the maximum power required by the device during normal use. For example, Li-ion cells having a maximum power output of between 100 W to 150 W typically have a capacity of between approximately 2000 mAh to 3000 mAh, whereas higher capacity Li-ion cells having a capacity of between approximately 3000 mAh to 3500 mAh typically have a significantly lower maximum power output of between approximately 30 W to 60 W, which is insufficient for many applications.

Document WO2021/122801 discloses a portable apparatus comprising a heater that provides, in use, a variable power demand.

There is therefore a need for more efficient battery-powered devices having improved run-time, whilst also ensuring sufficient maximum power output. Moreover, for devices that draw power from a mains power supply via a power supply unit (PSU) of the device, there is desire for reducing the size and cost of the PSU that need be provided in order to deliver sufficient power during use.

The present invention aims to address, or at least partially ameliorate, one or more of the above problems.

### Summary of the Invention

The present invention provides a hair styling device and a portable apparatus, as set out in the appended claims.

Methods and apparatus of the present disclosure enable batteries having a larger capacity (or a smaller and more lightweight PSU) to be used by smoothing out the power demand on the battery. The present inventors have realised that the combination of a power source and a capacitor enables the run-time of the device to be improved whilst also providing sufficient power output. Advantageously, the provision of the capacitor enables a wider range of battery technologies and/or PSUs to be used, since the lower power output of certain types of cells (or lower power PSUs, which are typically smaller and/or less complex and expensive) can be mitigated by smoothing out the peaks in the power demand.

According to a first aspect of the invention, there is provided a portable apparatus according to claim 1.

The control circuitry may be configured in the first configuration or the second configuration based on a magnitude of the variable power demand.

The control circuitry may be configured in the first configuration or the second configuration based on a magnitude of the variable power demand and a threshold power output of the power source; and the control circuitry may be configured in the second configuration when the variable power demand is greater than the threshold power output the power source.

The threshold power output may be based on an available power output of the power source.

The variable power demand may be a periodic power demand.

The portable apparatus may be a hair styling device. The energy storage means may comprise a capacitor.

The electrical component may comprise a first part that provides, in use, a first variable power demand, and a second part that provides, in use, a second variable power demand; wherein the power source is operable to charge the capacitor via the first part; and wherein the power source and the capacitor are operable to output power to the second part.

The portable apparatus may be operable to charge the energy storage means without passing a current through the component that provides the variable power demand.

The power source may be operable to charge the capacitor via at least one heater electrode of the heater. The at least one heater electrode may comprise a first heater electrode and a second heater electrode; wherein the power source is operable to charge the capacitor via the first heater electrode; and wherein the capacitor is operable to discharge via the second heater electrode.

The first heater electrode and the second heater electrode may be arranged in series.

The second heater electrode may have a lower resistance than the first heater electrode.

The first heater electrode may be powered by the power source at a higher voltage than the voltage from the energy storage means used to power the second heater electrode.

The heater may have one or more heating zones, each heating zone comprising the first heater electrode and the second heater electrode for heating the heating zone.

The heater may comprise a heating surface for heating hair that contacts the heating surface, and each heating zone may comprise a respective portion of the heating surface.

The first heater electrode and the second heater electrode may each heat the portion of the heating surface of the heating zone.

The heating surface may be defined by a common heating member, or each heating zone may have a respective heating member. The heating member may be planar, tubular, corrugated, or ribbed.

The first heater electrode and the second heater electrode of the heating zone may be interleaved.

The heater may comprise a plurality of the heating zones, and the portable apparatus may comprise a single controller for controlling whether the energy storage means can discharge via the second heater electrode of each of the heating zones.

The portable apparatus may further comprise a heater controller for controlling the power supplied to the first heater electrode and the second heater electrode by outputting a common control signal that is applied to a first switch coupled to the first heater electrode and a second switch coupled to the second heater electrode.

The heater controller may be configured to concurrently control the power supplied to the first heater electrode and the second heater electrode by outputting the common control signal.

The capacitance of the capacitor may be between 10 F and 100 F. The power source may comprise a cell or battery. The power source may comprise a power supply unit configured to draw power from a mains power supply.

The control circuity may be further configured to control the power output to the energy storage means based on a charge state of the energy storage means.

The power output to the component that provides the variable power demand and the power output to the energy storage means may be interleaved in the time domain.

According to another aspect of the invention, there is provided a method for controlling power delivery in a portable apparatus, the method comprising: providing an apparatus according to the first aspect; and controlling the delivery of power from the power source and the energy storage means.

**Brief Description of the Drawings**

Embodiments of the invention will now be described, by way of example only, and with reference to the drawings in which:

Figure 1a shows an overview of an exemplary hair styling device;

Figure 1b shows a hair styling device in use;

Figure 2 shows a simplified block diagram of a hair styling device;

Figure 3 shows a graph of a periodic power demand of a device;

Figure 4a shows a periodic power demand of a device and a corresponding power output of a power source of the device;

Figure 4b shows a periodic power demand of the device and further corresponding power output of a power source of the device;

Figure 4c shows a graph of instantaneous peak currents from the power source;

Figure 4d shows a graph of the duty cycle of the device;

Figure 4e shows a graph of dissipative energy losses at the power source;

Figure 5 shows a table indicating a maximum discharge current, maximum peak power and capacity of three power source configurations;

Figure 6a shows a circuit diagram of a configuration of power control circuity of a device;

Figure 6b shows a circuit diagram of a further configuration of power control circuity of a device;

Figure 7 shows a heater comprising two heater tracks;

Figure 8 shows a circuit diagram of a further configuration of power control circuity of a device;

Figure 9 shows a circuit diagram of a further configuration of power control circuity of a device;

Figure 10 shows a state of the power control circuity of Figure 9 in use;

Figure 11 shows a further state of the power control circuity of Figure 9 in use;

Figure 12 shows a further state of the power control circuity of Figure 9 in use;

Figure 13 shows a further state of the power control circuity of Figure 9 in use;

Figure 14 shows a further state of the power control circuity of Figure 9 in use;

Figure 15 shows a circuit diagram of a further configuration of power control circuity of a device; and

Figure 16 shows a graph of hair temperature against drying time.

**Detailed Description of Preferred Embodiments**

The present embodiments represent the best ways known to the applicant of putting the invention into practice. However, they are not the only ways in which this can be achieved.

*Device Overview*

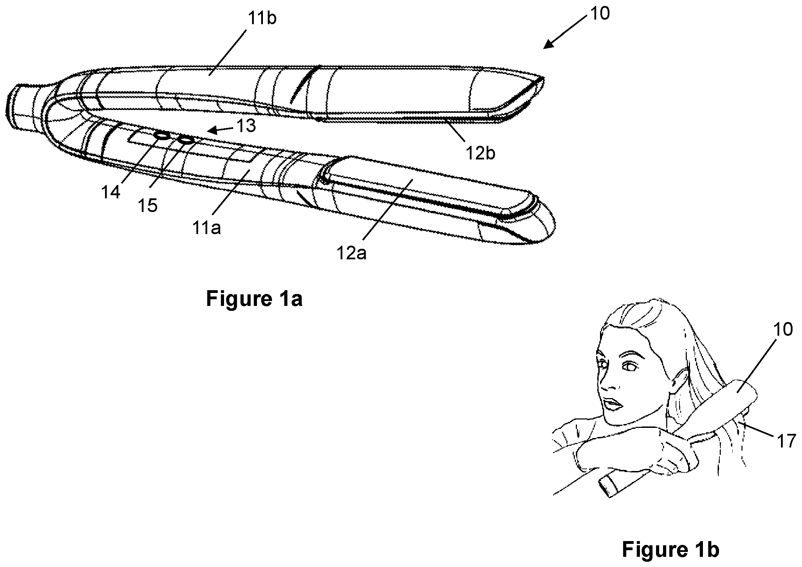

Figure 1a shows an overview of a hair styling device 10 suitable for implementing one or more methods of the invention. However, the device 10 need not necessarily be of the type illustrated in Figure 1a. Any other suitable type of device 10 (e.g. a suitable portable or handheld device) that uses power derived from a power source (e.g. a battery or PSU) may be used, such as a heated straightening brush, heated volumising brush, hair curler, e-cigarette, hot glue gun, or portable iron. The present disclosure is particularly relevant to devices that have an intermittent or periodic power load during use. It will be appreciated that the term 'portable device' is used to refer to both corded and cordless devices.

For ease of understanding, the present invention will be described mainly with reference to the type of device 10 shown in Figure 1a. The device of Figure 1a is a hair straightener comprising a pair of arms 11a, 11b, and a corresponding pair of heated plates 12a, 12b for transferring heat by conduction to the hair 17 of a user. The device 10 may comprise one or more conductive heaters, convective heaters, radiative heaters (or any combination thereof), or any other suitable heating means for transferring heat to the hair 17 of the user.

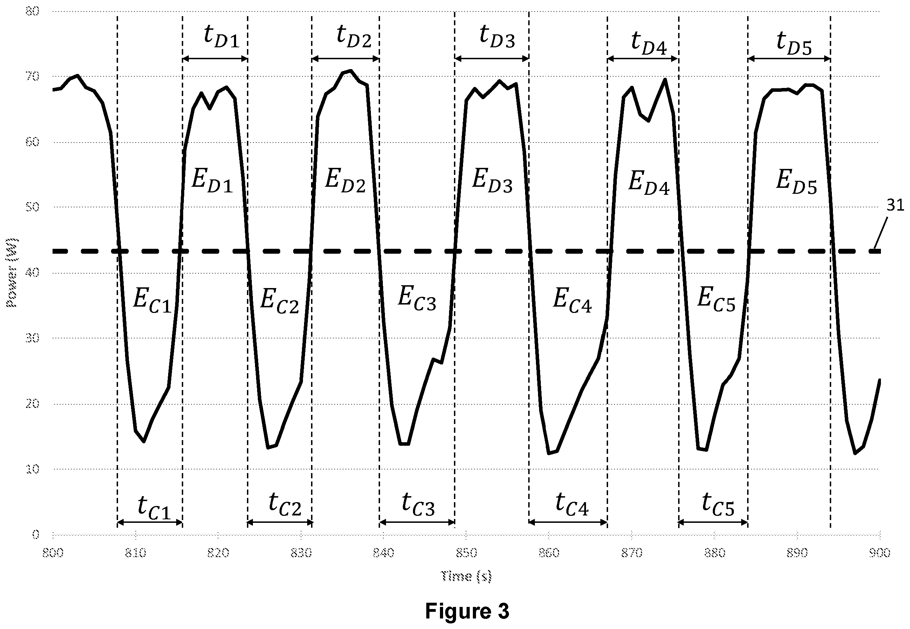

Figure 1b shows the device 10 in use during a styling process. In use, the device 10 will typically receive a length (tress) of hair 17 to be heated and styled using the heated plates 12a, 12b. As the user heats a tress of hair 17, heat is transferred from the heated plates 12 to the hair 17, and the overall power output that is required to maintain the plates 12 at the operational temperature is increased 10. In between passes of the device 10 through the user's hair 17, the overall power output required by the device to maintain the heated plates 12 at the operational temperature is relatively low. The overall power load of the device is therefore periodic or intermittent. It will be appreciated that references to 'periodic' power demand as used herein also includes power demands that are approximately periodic (i.e. not necessarily exactly periodic). In other words, as described later with reference to Figure 3, the period of the power demand need not necessarily be constant.

A user interface 13 is provided to allow the user to set user defined parameters and for the device 10 to output information to the user. For example, a temperature or moisture level of the hair 17 may be indicated to the user via the user interface 13, and/or the user may be able to set a desired temperature, moisture level, or style for the hair 17 via the user interface 13. The user interface 13 may comprise a dial, button or touch display for allowing the user to input information to the device 10 and the user interface 13 may comprise an indicator light, display, sound generator or haptic feedback generator for outputting information to the user. In this example, the user interface 13 also comprises a control button or switch 14 to enable the user to turn the device on or off; and an indicator light 15 to show whether the power is on. It will be appreciated that the user interface 13 may be provided at any suitable location on the device 10. Alternatively, the user interface may be omitted, or may simply comprise an on/off switch 14.

A printed circuit board assembly may be provided at any suitable location within the housing of the device 10 and carries the control circuitry for controlling the operation of the device 10 and for controlling the interaction with the user via the user interface 13. In this example, electrical power is provided to the device 10 by means of one or more DC batteries or cells provide inside the housing of the device 10 (not shown in the figure). The battery may be rechargeable, e.g. from the mains or a DC supply via a charging lead), thereby enabling the device 10 to be a cordless product.

Alternatively, electrical power may be provided by means of a PSU provided inside the housing of the device 10, via a power supply cord for drawing power from a mains power supply.

The device 10 may comprise one or more sensors for determining a temperature or moisture level of the hair 17, or a temperature of a part of the device 10. The measurements obtained using the sensors may be used to control the operation of the device 10 (e.g. to control the power output of the heaters).

The present invention is not limited to the type of device 10 illustrated in Figure 1a. For example, a device such as a heated brush could be used.

When the device 10 uses heated air to heat the user's hair 17, the device 10 may comprise a heater having an electrically-powered heating coil (or any other suitable type of heating element), operable to heat air drawn in by a fan assembly.

More generally, the invention relates to any suitable device that uses power derived from a power source (e.g. a battery or PSU provided within a housing of the device).

***Illustrative Block Diagram***

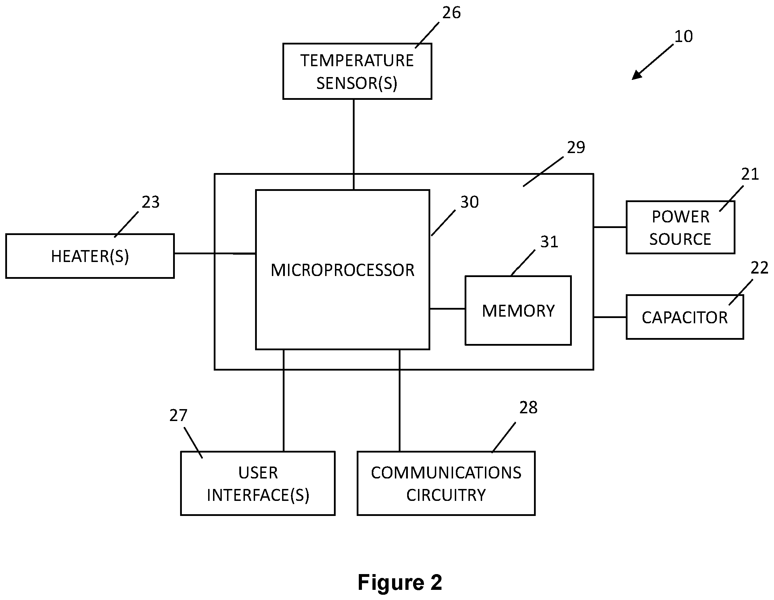

Figure 2 is a simplified block diagram of the device 10 illustrating its main components.

As shown, the device 10 comprises a power source 21. The power source 21 may be a PSU that derives power from a mains power supply via a power supply cord. Alternatively, the power source 21 may be a battery, in which case a mains power supply input could be used to charge the battery via an AC to DC converter, which may be external or internal to the device 10. The device 10 also comprises a capacitor 22. The capacitor 22 may be a supercapacitor (or a plurality of supercapacitors arranged in series or in parallel) having a capacitance of, for example, between 10 F and 100 F. Two or more capacitors may be arranged in series in order to increase the operational capacitor voltage. Two or more capacitors may be arranged in parallel to increase the overall capacity whilst providing greater flexibility in size/footprint. As described in more detail below, the capacitor 22 is configured for receiving power from the power source 21 to charge the capacitor 22, and for outputting power to the heater 23 (which may be the heated plates 12) by discharging through one or more heater tracks (which may also be referred to as 'heater electrodes') of the heater 23. The power source 21 is also arranged for outputting power to the heater 23, such that the heater 23 can receive power from the power source 21 and the capacitor 22 simultaneously.

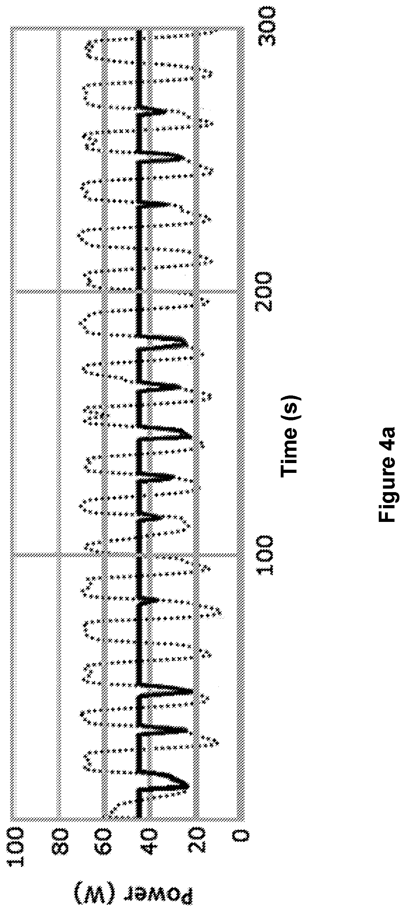

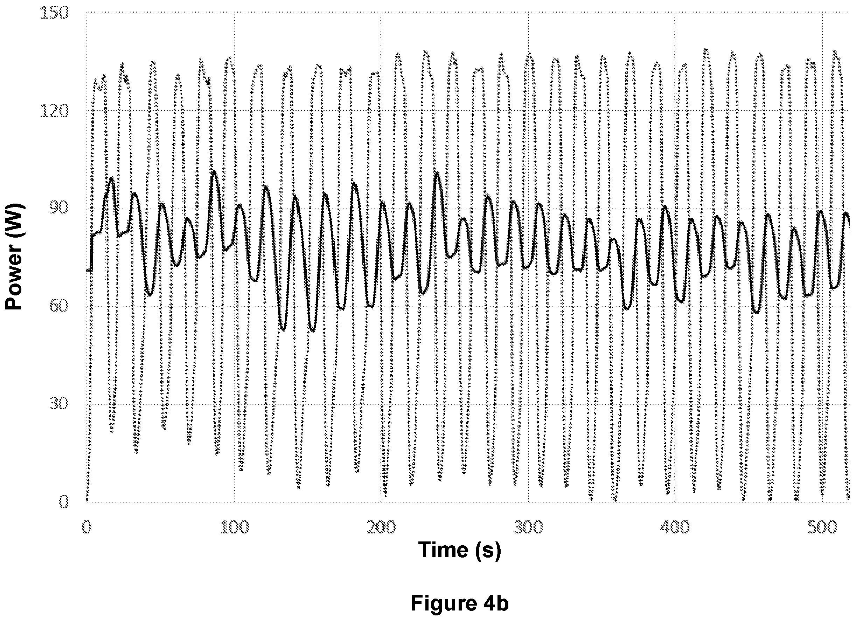

In use, the capacitor 22 receives power from the power source 21 to charge the capacitor 22 when the power output of the heater 23 is below a first threshold, and outputs power to the heater 23 when the power output of the heater 23 is above a second threshold. The first and second thresholds may be the same, or alternatively may be different. The first and/or second thresholds may correspond to an average power output of the device 10. The first and/or second thresholds may alternatively be based on a power output available from the power source 21. The power output available from the power source 21 need not necessarily be the maximum possible power that could be output from the power source 21, but may instead be a preconfigured operational maximum power output (e.g. a preconfigured threshold maximum power output that prevents the power source 21 from operating at power levels that are inefficient or cause excess dissipative losses and heating of the power source 21). In use, when the power source 21 is charging the capacitor 22, the maximum power that can be output from the power source 21 to the heater 23 may also depend on the charge state of the capacitor 22. The capacitor 22 acts as a buffer of stored energy that can be output to the heater 23 depending on the power demand at the heater 23, to supplement the power that is delivered to the heater 23 from the battery 23. During periods in which the power demand at the heater 23 is low, the capacitor 22 is recharged using power from the power source 21. As described later with reference to figures 4a and 4b, the provision of the capacitor 22 therefore smoothes the power output required from the power source 21, lowering the maximum power output required (and therefore lowering the peak 'instantaneous' current), whilst ensuring that sufficient power is delivered to the heater 23.

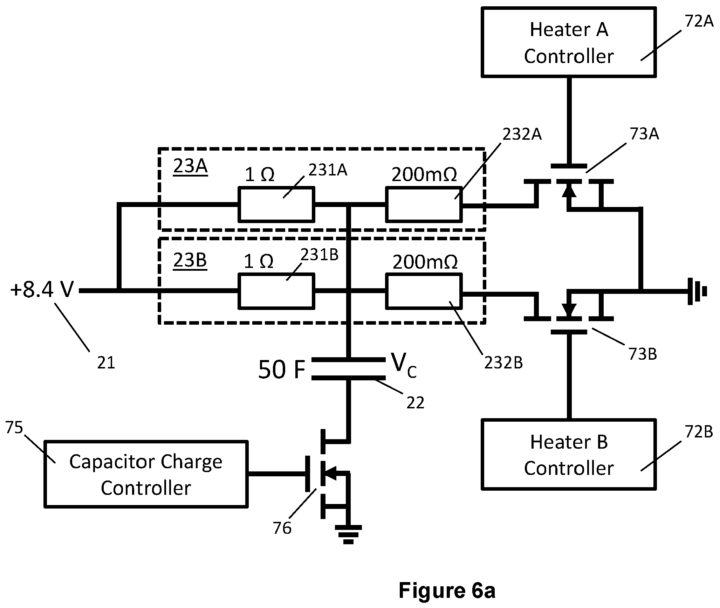

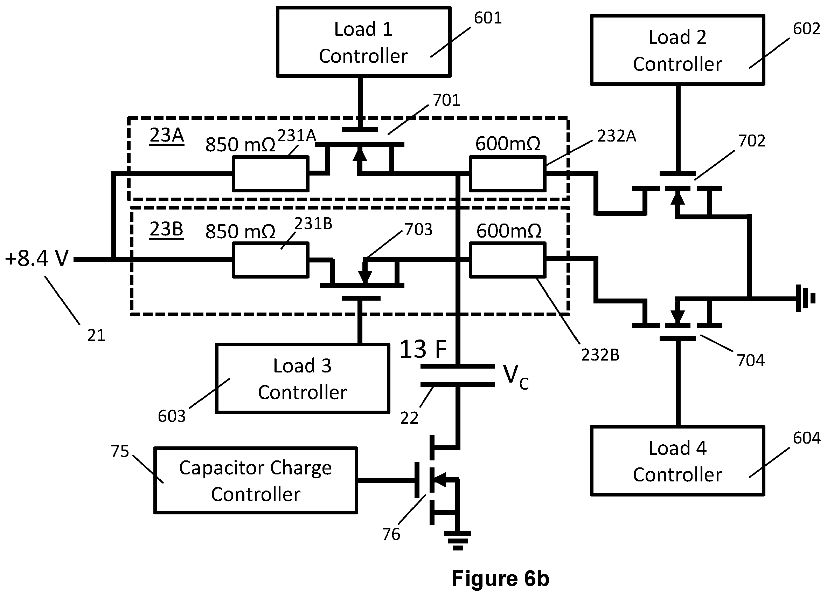

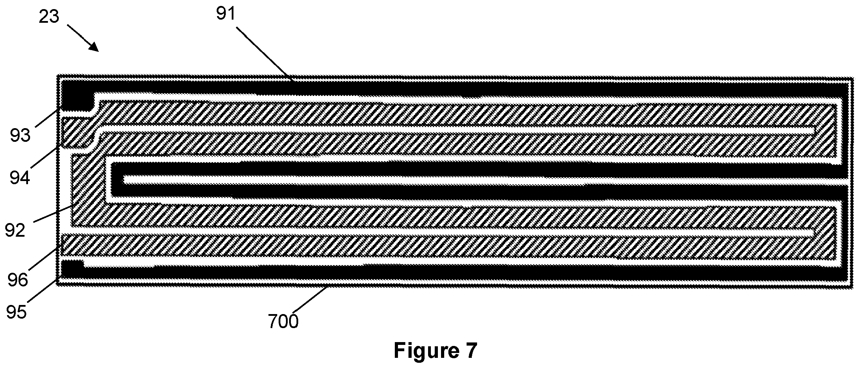

In this example, the power output of the power source 21 (to the capacitor 22 and to the heater 23), and the power output of the capacitor 22 (to the heater 23) are controlled by a controller 29 having a microprocessor 30. The microprocessor 30 is coupled to a memory 31 (which is typically a non-volatile memory) that stores processor control code. The controller 29 controls the overall operation of the device 10 according to instructions stored in the memory 31. The power supplied to the heater(s) 23 may be controlled using one or more power semiconductor switching devices (triacs) to control application of an AC mains voltage (or a DC voltage derived from the AC mains using an internal or external power supply unit, or from a battery) to the heater 23. Any suitable voltage could be used to provide power to the heaters, for example 20 V to 80 V. Examples of power supply and control circuitry that may be used in the device 10 are described later with reference to figures 6a, 6b, and 7. However, the power output of the power source 21 and the power output of the capacitor 22 need not necessarily be controlled using a controller 29 having a microprocessor 30. Alternatively, for example, the device 10 may simply comprise control circuitry including one or more voltage-dependant, current-dependant, or temperature-dependent switches for controlling the power output of the power source 21 and the power output of the capacitor 22.

In this example power is provided to one or more heaters 23, from the power source 21 and from the capacitor 22, for subsequent transfer of heat to the hair 17. For devices 10 that use a flow of heated air to transfer heat to the hair 17, the heaters 23 heat an air stream generated by one or more fans that are rotated by one or more fan motors (not shown in the figure). The device 10 need not necessarily comprise a heater 23; advantages of the present disclosure are achieved when the device 10 comprises any other suitable component(s) or part(s) that require a supply of power from the power source 21 and the capacitor 22 to satisfy a load (and in particular an intermittent, periodic or time-dependent (variable) load).

When the device 10 comprises a plurality of heaters 23 (or a plurality of heater tracks of a single heater 23), two or more of heaters 23 may be powered during an initial warm-up phase to reduce the time taken to reach the desired operating temperature. Similarly, if the temperature of a hair contacting surface of the heater 23 drops below a desired operating temperature, for example due to wet hair contacting the heater 23, two or more heaters 23 may be powered to provide a boost of heat (in a so-called "boost mode") to counter heat lost to the hair 17, and to increase the removal rate of the water. This boost mode leads to a relatively sudden increase in the power demand at the heater(s) 23. At other times, only one of the heaters 23 or heater tracks might be powered to maintain the desired operating temperature, requiring a lower power demand. It will be appreciated, therefore, that periodic activation of the boost-mode results in a periodic overall power demand of the device. However, it will be appreciated that even for devices having a single heater, a periodic power demand is caused by periodic loading of hair onto the styling surface 12.

Figure 2 also shows that the user interface 27 is coupled to the microprocessor 30, for example to provide one or more user controls and/or output indications such as a visual indication or an audible alert. The output(s) may be used to indicate to the user, for example, when a temperature moisture level of the hair 17 is within a predetermined range of a corresponding target temperature or moisture level.

The device 10 may comprise one or more temperature sensors 26 for sensing a temperature of the hair 17, or for sensing a temperature of a hair contacting surface of the heater 23. The temperature sensor(s) 26 may be a non-contact type of sensor (for example, an infrared sensor). To help control the moisture level of the hair 17, it is advantageous to have accurate measurements (either direct or indirect) of the current moisture level of the hair 17. Therefore, the device 10 may also be provided with one or more moisture sensors (not shown in the figure). A temperature measurement of a part of the device 10 can be measured directly or indirectly. For example, a heat pipe could be used to transfer heat through conduction from the part whose temperature is to be measured to an internal sensor.

The device 10 may comprise one or more wetline product dispensers (not shown in the figure) for dispensing liquids such as water or styling products onto the hair 17. The device 10 may be configured to dispense liquid from a dispenser onto the hair 17 during a drying or styling process to provide improved control of the moisture level of the hair 17. Alternatively, a wetline product dispenser could be provided separately from the device 10, for example as a separate diffuser (e.g. a desktop-based diffuser).

The device 10 may comprise communications circuitry 28 to allow the device 10 to communicate with a remote sensor, a remote server, or a remote application (e.g. on a mobile telephone). The communications circuitry 28 may use, for example, Bluetooth, Wi-Fi and/or 3GPP communication protocols to communicate with the remote device.

The microprocessor 30 may be configured to communicate with the heater 23, temperature sensor 26, user interface 27, communications circuitry 28, power source 21 and capacitor 22 (and to communicate with any other suitable elements of the device 10) via one or more communication interfaces or transceivers in accordance with software stored in the memory 31. The memory 31 may store, for example, one or more operating profiles or parameters. Software stored in the memory 31 may include, for example, an operating system.

As those skilled in the art will appreciate, the device 10 does not need to have all of the blocks illustrated in Figure 2. For example, the communications circuitry 28 need not necessarily be provided.

### Periodic Power Demand

Figure 3 shows a graph illustrating a periodic power demand of the device 10. The solid line indicates the overall power demand of the device 10 (in this example, caused by the power required at the heater 23), and the dashed line 31 indicates the average power demand. As illustrated in the figure, there are time periods $t_{D1}$ to $t_{D5}$ in which the power demand exceeds the average power demand, and time periods $t_{C1}$ to $t_{c5}$ in which the power demand is below the average power demand. The time periods $t_{D1}$ to $t_{D5}$ need not necessarily be of equal duration. Similarly, the time periods $t_{C1}$ to $t_{c5}$ need not necessarily be of equal duration. Additionally, the values of $t_D$ and $t_C$ shown in Figure 3 need not necessarily be constant or near constant.

In this example, the periodic load is caused by the user periodically moving the device 10 through the hair 17, to transfer heat to the hair 17 from the heater 23. The period of the use (corresponding to $t_D + t_C$) may be, for example, approximately 20 seconds (but may also be longer or shorter, e.g. 2 seconds). This corresponds to the time taken by the user to select and place a tress of hair 17 into the device 10 and for the device 10 to be run along that tress of hair.

A period of high load occurs when a new tress of hair 17 is introduced onto the hair contacting surface of the heater 23 and as the user moves the device along the tress of hair 17 (in order to maintain the hair contacting surface of the heater 23 at the desired operating temperature). In contrast, when the tress of hair 17 is removed from the hair contacting surface of the heater 23, the power required drops sharply to a relatively low level that is just enough to maintain the hair contacting surface of the heater 23 at the desired operating temperature (for example, approximately 12 W as shown in Figure 3). Therefore, whilst the instantaneous maximum power required by the device 10 is relatively high (approximately 70 W in this example), the average power required is significantly lower (in this example, approximately 42 W).

Whilst the maximum power demand could be met by providing two so-called "High-Range" battery cells having a relatively high maximum power output (e.g. around 200 W), these types of battery cells typically have a relatively low capacity (and so do not last as long between charges). In contrast, whilst higher capacity 'mid-range' cells could alternatively be provided, these may not output sufficient power to satisfy the maximum power demand. For example, the styling performance of a hair styling device when the maximum power output is below approximately 70 W may be poor. However, the present inventors have realised that the power demand on the power source 21 can be 'smoothed out' by use of the capacitor 22 as an energy buffer, lowering the maximum power output required from the power source 21, and enabling the use of higher capacity cells (including next-generation solid-state batteries having improved capacity but reduced maximum current/power output) that extend the run-time of the device (or the use of smaller/reduced-weight PSUs). More generally, the provision of the capacitor 22 and the corresponding 'smoothing out' of the power demand on the power source 21 enables higher capacity cells having a lower power output (or a lower power PSU) to be used as the power source 21.

In this example, as described later with reference to figures 4a and 4b in which the power output of the power source 21 is illustrated by the solid black line, the power source 21 is configured to output power corresponding to the average power demand of the device indicated by the dashed line 31 in Figure 3 (approximately 42 W in this example). Alternatively, the power source 21 may be configured for delivering more than the average power demand of the device 10, which reduces the power demand on the capacitor 22 (enabling a lower capacity capacitor 22 to be used) and helps mitigate against variations in average power draw.

In the time periods $t_C$ in which the power demand of the heater 23 is less than the power available from the power source 21, the power source 21 is used to charge the capacitor 22. For example, as shown in Figure 3, the amount of energy transferred to the capacitor 22 from the power source 21 during $t_{C1}$ corresponds to the area $E_{C1}$ between the solid line and the dashed line (and similarly for areas $E_{C2}$ to $E_{C5}$ in time periods $t_{C2}$ to $t_{C5}$, respectively).

In the time periods $t_D$ in which the power demand of the heater 23 is greater than the power available from the power source 21, the power output from the power source 21 is output in full to the heater 23, and is supplemented by power output from the capacitor to the heater 23 to meet the demand. Power is output from the capacitor 22 to the heater 23 by discharging the capacitor 22 through one of more heater tracks of the heater 23. As shown in Figure 3, the amount of energy output to the heater 23 from the capacitor 22 during time period $t_{D1}$ corresponds to the area $E_{D1}$ between the solid line and the dashed line (and similarly for areas $E_{D2}$ to $E_{D5}$, in time periods $t_{D2}$ to $t_{D5}$, respectively). The capacitor 22 acts as a buffer of stored energy that enables the power source 21 to output power at a level that is lower than the maximum power required at the heater 23, by supplementing the power output of the heater during the periods of high power demand (and by recharging using energy from the power source 21 during periods of lower power demand).

The fully charged voltage for the capacitor may be, for example, approximately 3 V, and the average charge/discharge energy per pass through the user's hair may be approximately 180 J. The capacitor may be, for example, a Tecate Group TPLH-3RO 40 F capacitor, or a Vishay MAL22091001E3 40 F capacitor. The capacitance of the capacitor may be, for example, greater than or equal to 40 F. However, it will be appreciated that any other suitable capacitor may be provided (e.g. 15 F). The capacitor may also be referred to as a so-called 'supercapacitor'.

In this example, the peak discharge power of the supercapacitor is (approximately) given by:

$$P_D = P_{Max} - P_{Avg},$$

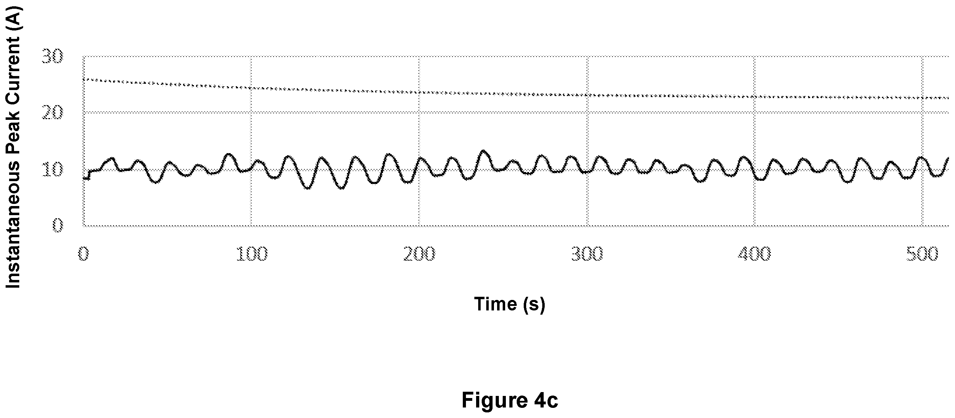

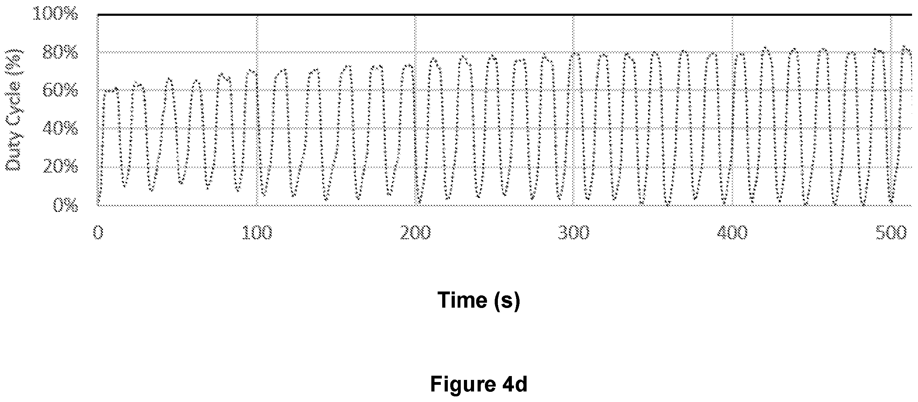

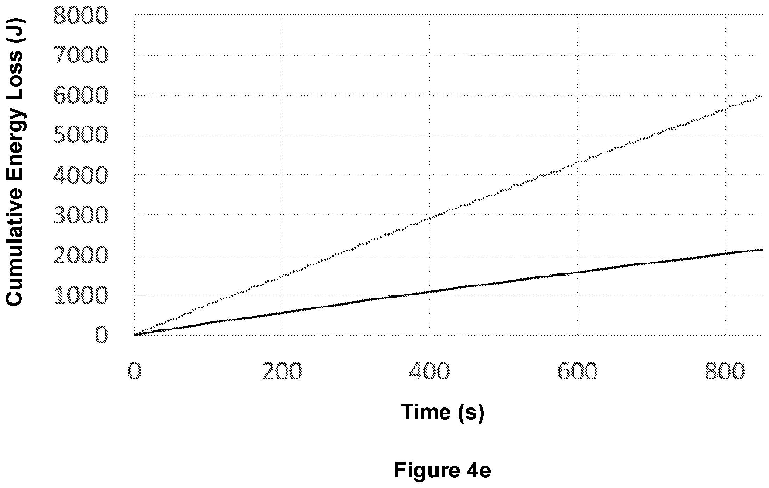

where Pd is the peak discharge power (in this example, approximately 27 W), $P_{Max}$ is the maximum power required by the heater 23 and $P_{Avg}$ is the average power of the heater (which in the example corresponds to the power output of the power source 21). Figure 4a shows the periodic power demand of the device 10 and the near-constant power output of the power source 21. The dotted line shows the periodic total power demand of the device 10, and the solid line shows the power output of the power source 21. As shown in the figure, by virtue of the provision of the capacitor 22 the power output from the power source 21 is smoother than the highly-variable power demand of the heater 23, reducing the peak power output required from the power source 21. Moreover, the reduction in the peak power output required from the power source 21 enables heaters having higher resistances that result in reduced peak currents to be used. The small drops in the power output of the power source 21, illustrated in Figure 4a, correspond to periods in which the capacitor 22 is fully charged and the power output of the heater 23 is low (and therefore the full power output of the power source 21 is not required). The device 10 need not necessarily be configured for output of a constant (or near constant) power level from the power source as illustrated in Figure 4a. Alternatively, as illustrated in Figure 4b (in which the dotted line shows the periodic total power demand of the device 10, and the solid line shows the power output of the power source 21) the provision of the capacitor 22 may reduce the magnitude of the variations in power demand from the power source 21, without eliminating the periodic variations entirely. Nevertheless, reducing the magnitude of the variations in the power demand from the power source 21 advantageously reduces the peak power required from the power source 21. Similarly, referring to figures 4c and 4d, the provision of the capacitor 22 enables sufficient power to be supplied to meet the overall power demand of the heaters whilst using higher resistance heater elements, enabling a reduction in the instantaneous peak current and reducing the dissipative losses at the power source 21. The increased heater element resistance results in the reduced peak currents from the power source 21, whilst the capacitor 22 ensures that the power demand at the heaters can still be met. In Figure 4c, the solid line shows the instantaneous peak current from the power source 21 when the capacitor 22 is provided, and the dotted line shows the instantaneous peak current from the power source 21 if the capacitor 22 were not provided (i.e. if the overall power demand was simply supplied directly from the power source 21). Corresponding duty cycles are shown in Figure 4d, in which the duty cycle for when the capacitor is provided 22 is illustrated by the solid line and the duty cycle for when the capacitor 22 is not provided is illustrated by the dotted line. As shown in figures 4c and 4d, the provision of the capacitor 22 enables the power source 21 to operate in an 'always on' state (i.e. a 100% duty cycle) in which the power source 21 can be used to power the heaters or charge the capacitor 22, and to operate with lower instantaneous peak current. In contrast, when the capacitor 22 is not provided, the duty cycle is non-constant and the instantaneous peak current is higher. It will be appreciated that the graph of Figure 4c shows the instantaneous peak currents rather than the current itself, and that the current when the capacitor is not provided is not constant (since it will depend on the overall power demand and the duty cycle). As illustrated in Figure 4e, which shows the cumulative energy loss at the power source 21 for when the capacitor 22 is provided (illustrated by the solid line) and when the capacitor 22 is not provided (illustrated by the dotted line), the provision of the capacitor and the corresponding reduced peak currents significantly reduces the dissipative losses at the power source 21 (in this example, the dissipative losses are reduced by approximately 60%).

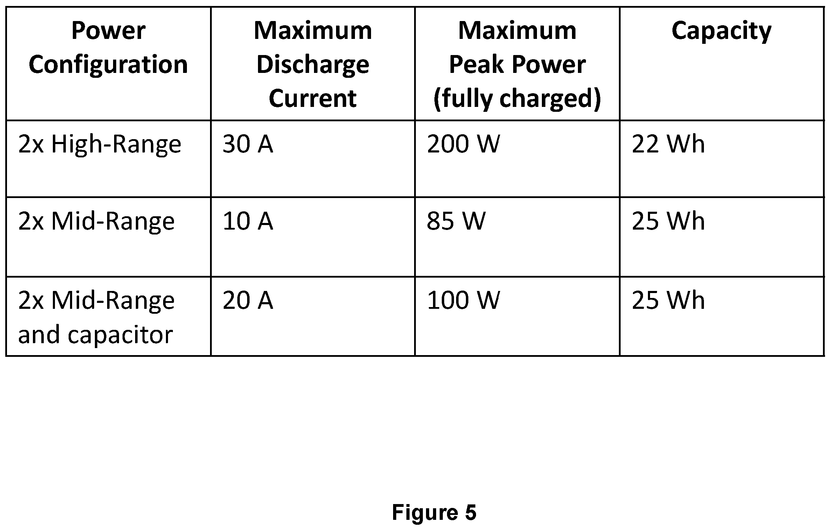

Figure 5 shows a table indicating a maximum discharge current, maximum peak power and capacity of three power configurations, and illustrates advantages of providing the capacitor 22 in addition to the power source 21. As shown in the figure, when two lower-capacity but high-power-output 'high-range' battery cells are provided the maximum peak power is high. However, the capacity of the high-range battery cells is relatively low, resulting in a lower run-time of the device. When two higher-capacity but lower-power-output 'mid-range' battery cells are provided, the capacity and run-time are improved. Beneficially, the run-time may be improved by approximately 25 percent. However, the maximum peak power of the higher-capacity mid-range cells is insufficient for many applications. In contrast, the provision of the capacitor 22 in addition to the mid-range battery cells (or alternatively any other suitable type of higher capacity cell, such as a next generation solid-state cell) increases the maximum peak power available, whilst still obtaining the advantages of the improved capacity of the mid-range battery cells. The provision of the capacitor 22 advantageously lowers the power output that is required from the battery cells, enabling battery cells that have a lower maximum peak power, but higher capacity, to be used as the power source 21 of the device 10. Moreover, even for battery cells having a relatively high maximum power output, operating the battery cell at a lower maximum power output increases the efficiency and run-time of the device. This is because the corresponding reduced maximum instantaneous current reduces the dissipative losses that occur in the battery cell, due to internal resistance, as the battery cell discharges. For example, when a battery cell outputs power according to the power output profile indicated by the dotted line shown in Figure 4a, in which there are large peaks in the power output, the temperature of the battery cells increases due to the relatively large dissipative losses. In contrast, in the present invention, the provision of the capacitor enables the power source 21 to output power according to the profile indicated by the solid line in figure 4a or 4b (in which the maximum power output by the power source 21 is lower), whilst still meeting overall the power demand indicated by the dotted line. The smoother power output profile reduces the dissipative losses in the battery cell, resulting in improved efficiency and run-time, and also reduces degradation of the battery cell performance over the lifetime of the device 10. Moreover, the reduction in the dissipative losses in the battery reduces the risk that a battery cell will overheat before the battery can be fully discharged. For example, a higher-capacity mid-range battery operating at 70 W may reach a safety cut-out temperature of 65 °C after approximately 10 minutes of runtime (corresponding to having used approximately 50% to 60% of the battery capacity). In contrast, a higher-capacity mid-range battery operating at 40 W may reach the safety cut-out temperature after approximately 32 minutes of runtime, or may not reach the safety cut-out temperature at all.

## Power Control Circuity

Examples of power control circuitry that may be used in the device 10 will now be described.

When charging a capacitor using power from a power source, a large fraction of the energy output by the power source to charge the capacitor is dissipated as heat in the charging circuit. There is a theoretical limitation to how efficiently the capacitor 22 can be charged from the power source 21. The total energy delivered from a constant voltage power source is the product of the total charge moved and the source voltage:

$$E_S = Q \cdot V_S$$

The charge moved is stored on the capacitor 22, and is a function of the capacitor voltage:

$$Q = C \cdot V_C(t)$$

Therefore, the total energy delivered is given by:

$$E_S = C \cdot V_S \cdot V_C(t),$$

and the energy stored on the capacitor 22 is given by:

$$E_C = \frac{1}{2} C \cdot V_C(t)^2$$

The ratio of energy stored on the capacitor 22 and the energy delivered by the power source 21 (which corresponds to the storage efficiency) is given by:

$$\frac{E_C}{E_S} = \frac{1}{2} \cdot \frac{V_C(t)}{V_S}$$

The charging system is most efficient when the capacitor has charged to the source voltage:

$$\frac{E_C}{E_S} = \frac{1}{2}$$

Therefore, even in the ideal scenario, energy can only be output from the power source 21 to be stored on the capacitor 22 at 50% efficiency. This relatively high energy loss could reduce the efficiency and run-time of the device 10. However, the present inventors have realised that by charging the capacitor 22 via the heater 23 itself, the energy that would normally be wasted as dissipative losses can be output as useful heat energy at the heater 23. Examples of configurations in which the capacitor 22 is advantageously charged via a heater track of the heater 23 are set out below. However, it will be appreciated that the advantage of improved efficiency may be obtained for any other suitable configuration in which the capacitor is charged via a heater track of the heater 23.

Split Heater Configuration

Figure 6a shows a circuit diagram of a device comprising two heaters 23A, 23B, in which the capacitor 22 is charged (and discharged) via the heaters 23A, 23B. In this example, each heater 23 is formed by a resistive track having two parts - a charging part 231A, 231B through which the capacitor 22 is charged, and a discharging part 232A, 232B through which the capacitor 22 discharges. The power source 21 can also discharge through both the charging part 231A, 231B and the discharging part 232A, 232B of each heater 23. This configuration results in a smooth power delivery from the power source 21 with reduced dissipative losses. Advantageously, the energy that would normally be wasted due to resistive losses in the capacitor charging circuit is output as useful heat energy at the heater (since the capacitor is charged via the charging part 231A of a first heater 23A, and via the charging part 231B of a second heater 23B), improving the efficiency and run-time of the device 10.

In this example, the two heaters 23A, 23B are arranged in parallel with the battery 21. The operation of each of the heaters 23A, 23B is controlled by a corresponding heater controller 72A, 72B using switches 73A, 73B (for example, the switches may be field-effect transistors). For example, when the heater A controller 72A performs control to close the switch 73A (thereby connecting the discharge part 232A of the heater 23A to ground), current from the power source 21 (and current from the capacitor 22, when the capacitor is discharging) flows through the corresponding heater 23A to ground which causes heating of the heater 23A. Similarly, when the heater B controller 72B performs control to close the switch 73B (thereby connecting the discharge part 232B of the heater 23B to ground), current from the power source 21 (and current from the capacitor 22, when the capacitor is discharging) flows through the corresponding heater 23B to ground which causes heating of the heater 23B. Independent heater controllers 72 are provided as the different heaters 23 may be at different temperatures and so one heater may need more heat than the other. The heater controllers 72 may control the opening and closing of the switches 73 (and hence the heat output of the heaters 23) based on, for example, a measurement of a temperature of the heater, a measurement of a temperature of the hair of the user, a measurement of a moisture level of the hair 17 of the user, or any other suitable measurement or parameter.

As illustrated in Figure 6a, the power source 21 can also output power to the capacitor 22 via the charging part 231A of a first heater 23A and via the charging part of a second heater 23B, to charge the capacitor 22. The charging of the capacitor 22 (and the discharging of the capacitor 22) is controlled by the capacitor charge controller 75 which opens and closes the switch 76. Specifically, when the switch 76 is closed and the capacitor 22 is connected to ground, then the capacitor 22 can be charged and discharged. However, when the switch 76 is open, the capacitor 22 is isolated from ground and cannot be charged or discharged.

When the switch 76 is closed and the switches 73 are open, then current will flow from the power source 21 to the capacitor 22 until the capacitor 22 is charged to a desired level (controlled by the capacitor charge controller 75), at which point the charging is stopped by the capacitor charge controller 75 opening the switch 76. It will be appreciated that when the power source 21 is charging the capacitor 22 via the charging parts 231A, 231B of the heaters, and the switches 73A and 73B controlled by the heater controllers 72A, 72B are open, the maximum power that can be provided by the power source 21 to the heaters 23 depends on the charge state (and the corresponding voltage $V_c$) of the capacitor. When the capacitor is to be discharged, the capacitor charge controller 75 closes the switch 76 again at the same time that one or both of the switches 73A and 73B is closed. Specifically, when the power demand of one or both of the heaters 23 is greater than can be provided by the power source 21 (or greater than an operational available power of the power source 21 that is lower that the absolute maximum power that could be output by the power source 21, e.g. to improve the efficiency of the power source 21), the capacitor charge controller 75 closes the switch 76 and one or both of the heater controllers 72 closes the corresponding switch 73, the capacitor 22 will discharge through the corresponding discharge part 232 of one or both heaters 23 to ground.

In more detail, if heater 23A needs more power than the operational available power of the power source 21, then capacitor charge controller 75 closes the switch 76 and Heater A controller 72A closes the switch 73A (if it is not already closed). As a result, current flows from the power source 21 through the charging part 231A and the discharging part 232A of the heater 23A to ground; and current will flow from the capacitor 22 through the discharging part 232A of the heater 23A to ground. Similarly, if heater 23B needs more power than the operational available power of the power source 21, then capacitor charge controller 75 closes the switch 76 and Heater B controller 72B closes the switch 73B (if it is not already closed). As a result, current flows from the power source 21 through the charging part 231B and the discharging part 232B of the heater 23B to ground; and current will flow from the capacitor 22 through the discharging part 232B of the heater 23B to ground. If both heaters 23A and 23B need to be heated, then the current available from both the power source 21 and the capacitor 22 will be divided between the two heaters 23.

Figure 6b shows a modification of Figure 6a in which four controllers are used to control the flow of current through the first and second heaters 23. Load 1 controller 601 controls the flow of current through the charging part 231A of a first heater 23A by controlling the state of switch 701. Load 2 controller 602 controls the flow of current through the discharging part 232A of the first heater 23A by controlling the state of switch 702. Load 3 controller 603 controls the flow of current through the charging part 231B of the second heater 23B by controlling the state of switch 703. Load 4 controller 604 controls the flow of current through the discharging part 232B of the second heater 23B by controlling the state of switch 704. Beneficially, therefore, finer control of the power output at each of the resistive heating elements of the heater (and finer control of the charging of the capacitor 22) is achieved. For example, load 1 controller 601 and load 3 controller 3 may perform control to close the corresponding switches 701, 703 for output of heat from the charging parts 231A, 231B of the first and second heaters, and to charge the capacitor 22. Load 1 controller 601 and Load 3 controller 604 may perform control to interleave the power delivery at the first and second heaters. In other words, load 1 controller 601 and load 2 controller 602 may perform control to alternate the power output between the charging part 231A of the first heater and the charging part 231B of the second heater. The interleaved power distribution between the first and second heaters need not necessarily be evenly distributed and may depend on the individual power demand at that time of the respective heater 23. Load 3 controller 603 and load 4 controller 604 may perform similar control, to control the power output at the discharging parts 232A, 232B of the heaters (e.g. for interleaved power output). More generally, the load controllers may perform control to achieve a particular power output distribution between each of the heaters 23 over time. This is advantageous, for example, when there is an uneven load on the heaters (e.g. due to a user placing wet hair unevenly across the heaters).

Whilst in the examples shown in Figures 6a and 6b the heater (load) controllers and the capacitor charge controller 75 are shown as being separate controllers. As those skilled in the art will appreciate, these controllers may be provided by separate routines run by the microprocessor 30 shown in Figure 2. Alternatively, for example, the device may operate under the control of a single controller that controls the operation of the heaters, the power supplied by the power source 21, and the operation (charging and discharging) of the capacitor 22. The controller may obtain the capacitor 22 voltage, power source 21 voltage, heater temperature(s), and the power required at the heater(s) (which may also be referred to as 'power requested at the heater'), may determine how the power is to be supplied to the heater(s) from the power source 21 and/or the capacitor 22, and may control the charging/discharging of the capacitor 22, to supply the required power to the heaters 23 and manage the charge state of the capacitor 22. The controller may perform control of the power outputs and the charging/discharging of the capacitor 22 in order to minimise (or reduce) the current from the power source 21, thereby reducing the power losses due to the internal resistance at the power source 21. The controller may also perform control to prevent overcharging of the capacitor 22 (e.g. beyond a desired operational voltage).

Figure 6a and 6b illustrate that different sized capacitors and resistances of the track can be used and their values will be chosen depending on the application and the period of time over which the capacitor 22 is expected to be able to discharge its stored energy to the load (in this case the heaters 23). Similarly, the power source voltage used in the circuits shown in Figure 6 is given by way of example and different power source voltages may of course be used.

The number of heaters 23 need not necessarily be two. For example, a single heater 23 having a charging part 231A and a discharging part 232A may be provided in some applications. When the device 10 is a hair straightener (such as the type illustrated in Figure 1a), the first heater 23A may correspond to the first heated plate 12a, and the second heater 23B may correspond to the second heated plate 12b.

In the example circuits shown in Figures 6a and 6b, when the capacitor voltage $V_c$ falls too low, the capacitor 22 may be unable to provide sufficient power buffering, and may not act as a source of power for the heater 23 (depending on the resistance of the heater tracks). This may occur during a period of particularly intensive use of the device 10. A solution to this problem is to temporarily direct all of the power output of the power source 21 through the charging parts 231A, 231B of the heaters 23 to charge the capacitor 22 back to an operational voltage. However, this may result in an increase in the total power output from the power source 21 (significantly above the average power output), and so alternatively the capacitor may be recharged when the power demand at the heaters 23 is low, as described above. The charging of the capacitor 22 may be temporarily disabled (e.g. by opening the corresponding switch 76 under the control of the capacitor charge controller 75) to ensure that all of the power from the power source 21 is available to be output at the heaters 23 during a period of high power demand. In order to reduce the risk of the capacitor voltage $V_c$ falling too low, the power source could be operated 21 at a constant (or near constant) power output that is above the average power requirement of the heaters 23 (but is nevertheless less that the maximum power output that would be required if the capacitor 22 were not provided).

Figure 7 shows an exemplary configuration of heater tracks forming one of the heaters 23 that is used in the examples of Figures 6a and 6b. The heater 23 comprises a first heater track 91 and a second heater track 92. Each heater track has a corresponding input terminal 93, 94 and a corresponding output terminal 95, 96. In use, current flows along the heater tracks 93, 94 to generate heat that heats the heater 23 which then heats hair 17 that comes into contact with a hair contacting surface of the heater 23. The first heater track 93 could be used as the charging part 231 through which the capacitor 22 is charged, and the second heater track 94 could be used as the capacitor discharging part 232 through which the capacitor 22 discharges. The first heater track 93 and the second heater track 94 are interleaved (or 'nested') with each other, and each is arranged to heat the heating area of the heater 23 (in this example, defined by the outer rectangular area 700 illustrated in Figure 7). However, the heater tracks 23 need not necessarily be configured as shown in Figure 7. Any other suitable configuration of heater tracks could alternatively be used.

Interleaved Power Delivery Configuration

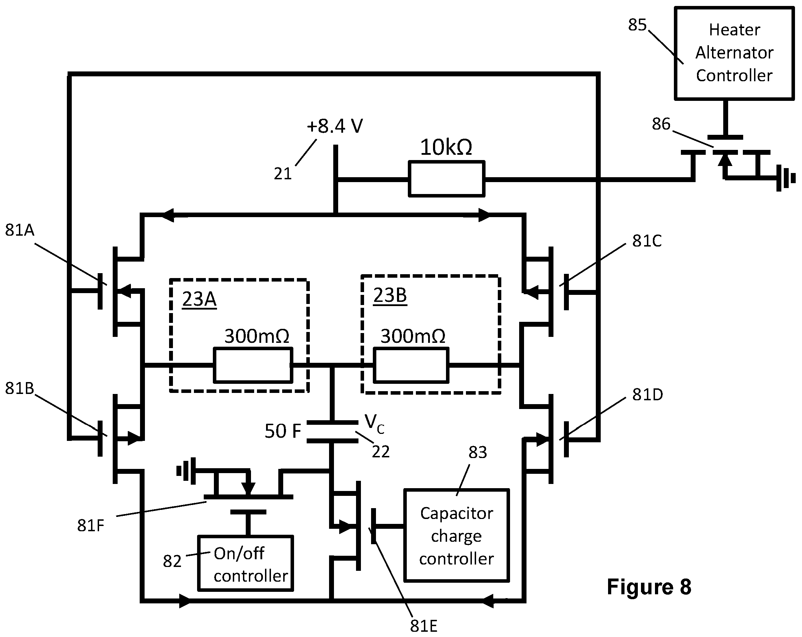

Figure 8 shows a circuit diagram of a further example of power control circuitry of the device 10. In contrast to the example of Figure 6a in which separate discharging 231A, 231B and charging 232A, 232B parts are provided, in this example each heater 23 need only comprise a single heater track that is used for both charging and discharging of the capacitor 22. With this circuit, power is interleaved between the two heaters 23A and 23B, such that only one of the heaters 23 receives power from the power source 21 at a given time when the capacitor is charging, and only one of the heaters 23 receives power from the capacitor 22 when the capacitor 22 is discharging. When the capacitor is discharging, both of the heaters 23 receive power from the power source 21.

The two heaters are arranged in series with the power source 21 and, as with the example of Figure 6a, share a common capacitor 22 that is charged through the heaters 23. Alternatively, rather than providing separate heaters 23A, 23B, two heater tracks of a single heater 23 could be used. The charging (and discharging) of the capacitor 22 is controlled by the capacitor charge controller 83 which opens or closes the switch 81E. Specifically, when the switch 81E is open and switch 81F is closed, the capacitor 22 is connected to ground through the switch 81F and so when current flows from the power source 21 through either of the heaters 23A or 23B, the current will charge up the capacitor 22 until it has been charged to the desired level. When charged, the capacitor can be discharged by closing switch 81E so that current from the capacitor 22 can flow through one of the heaters 23A or 23B, through one of the switches 81B or 81D and back to ground through switch 81F. The on/off controller 82 can turn off all powering of the heaters by opening the switch and thereby isolating the circuit from ground.

Whether the capacitor 22 is charged by current that flows from the power source 21 via the first heater 23A or via the second heater 23B, depends on the state of the switches 81A to 81D, which in turn depends on the state of switch 86, which is controlled by the heater alternator controller 85. Specifically, when switch 86 is closed, switches 81A and 81D will be closed and switches 81C and 81B will be open. As a result, current will flow from the power source 21 through switch 81A into heater 23A. If the switch 81E is open and switch 81F is closed, then current will flow into the capacitor 22 to charge the capacitor 22. However, if the switch 81E is closed, then current will flow from the power source 21 through heater 23A and then through heater 23B before passing to ground via switch 81F; and current will flow from the capacitor 22 through heater 23B to ground via switch 81F. On the other hand, when switch 86 is open, switches 81C and 81B will be closed and switches 81A and 81D will be open. As a result, current will flow from the power source 21 through switch 81C into heater 23B. Again, if the switch 81E is open and switch 81F is closed, then current will flow into the capacitor 22 to charge the capacitor 22. However, if the switch 81E is closed, then current will flow from the power source 21 through heater 23B and then through heater 23A before passing to ground via switch 81F; and current will flow from the capacitor through heater 23A to ground via switch 81F. Thus the switches 81A to 81D operate as an 'H-bridge' for alternating the connection of the power source between the two heaters 23A and 23B. The switching of the switch 86 can be performed rapidly so that both heaters 23 are effectively heated at the same time.

Advantageously, the configuration illustrated in Figure 8 enables heaters having only a single heater track to be used whist still obtaining the advantages of charging and discharging the capacitors via the heaters 23. Moreover, by changing the duty cycle of switch 86, the ratio of power output between the first 23A and second 23B heaters can be changed. For example, at 50% duty cycle, the first and second heaters receive the same amount of power. If the duty cycle was increased to 60%, the second heater 23B would receive 60% of the power and the first heater 23A would receive 40% of the power. Advantageously, therefore, the power distribution between the first 23A and second 23B heaters can be controlled, which is useful for mitigating against heater resistance differences caused by manufacture, as well as differential loads (e.g the user causing an uneven load at the heaters due to an uneven arrangement of hair across the heaters).

The frequency at which the power is switched between the first 23A and second 23B heaters may be any suitable frequency, but is typically fast compared to the frequency of the periodic power demand at the heater 23 caused by the loading of hair.

Whilst in the example shown in Figure 8 the heater alternator controller 85 and the capacitor charge controller 83 are provided separately, this need not necessarily be the case. Alternatively, for example, the device may operate under the control of a single controller (such as the microprocessor 30) that controls the operation of the heaters 23, the power supplied by the power source 21 and the operation (charging and discharging) of the capacitor 22. The controller may obtain the capacitor 22 voltage, power source 21 voltage and the power required at the heater(s) (which may also be referred to as 'power requested at the heater'), and may determine how the power is to be supplied to the heater(s) from the power source 21 and/or the capacitor 22 in order to supply the required power.

Whilst illustrative resistances, voltages and capacitances are shown in Figure 8, it will be appreciated that any other suitable values of the resistances, voltages and capacitances may be used.

*Independent Capacitor Charging*

Whilst the examples illustrated in figures 6a to 8 advantageously enable the capacitor 22 to be charged via a heater track, enabling energy that would normally be wasted as dissipative losses to be output as useful heat energy at the heater 23, this need not necessarily be the case. The examples illustrated in figures 6a to 8 are particularly advantageous where there is a power demand at the heaters 23 even when the device 10 is not in use to dry or style hair (for example, to maintain a hair-contacting surface of the heater 23 at a styling temperature even when the surface is not in contact with the hair), since the charging of the capacitor 22 can be used to provide this 'background' power output at the heaters 23. However, for some devices the background power demand may be low, in which case charging the capacitor 22 via the heater tracks may result in more heat output at the heaters than is desirable.

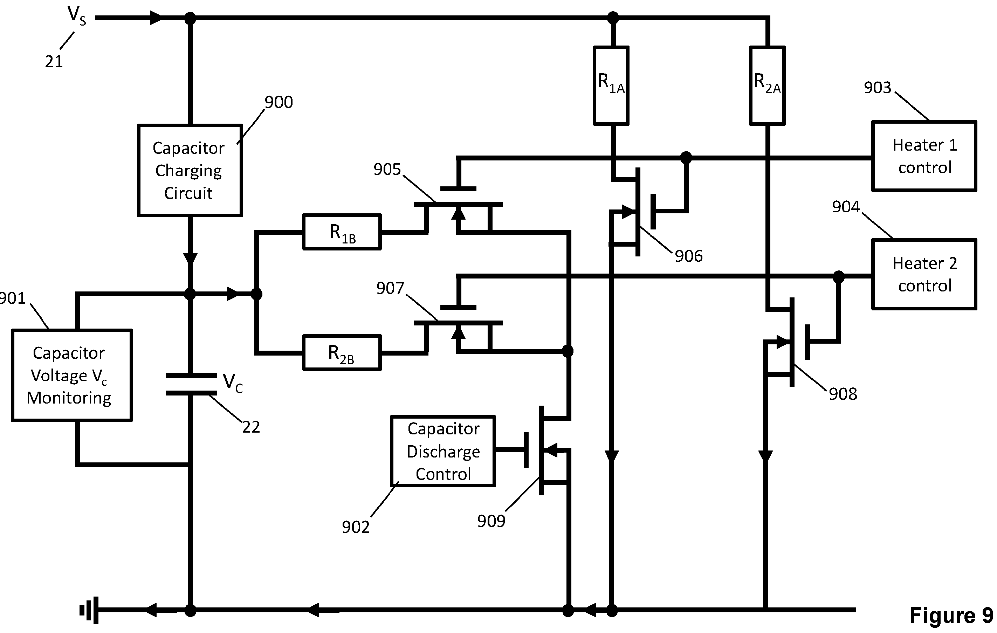

Figure 9 shows an example in which the capacitor 22 can be charged without passing a current through the heater tracks. Advantageously, therefore, when the power demand at the heaters 23 is low (or zero) and additional heat output at the heaters 23 is not desirable, the capacitor 22 can be charged without causing heat output via the heater tracks. The power control circuitry illustrated in Figure 9 nevertheless maintains the advantages of the provision of the capacitor 22 of enabling a more constant power draw from the power source 21, and enabling a higher available maximum peak power. The provision of the capacitor 22 advantageously lowers the power output that is required from the battery cells, enabling battery cells that have a lower maximum peak power, but higher capacity, to be used as the power source 21 of the device 10. Moreover, even for battery cells having a relatively high maximum power output, operating the battery cell at a lower maximum power output increases the efficiency and run-time of the device 10.

As shown in Figure 9, in this example four resistive heating elements ($R_{1A}$, $R_{1B}$, $R_{2A}$, $R_{2B}$) are provided. Heating elements $R_{1A}$ and $R_{2A}$ are powered directly by the power source 21. Heating elements $R_{1B}$ and $R_{2B}$ are powered by the capacitor 22. The power source 21 may power heating elements $R_{1A}$ and $R_{2A}$ using a voltage that is higher than the voltage from the capacitor 22 for powering heating elements $R_{1B}$ and $R_{2B}$. Heating elements $R_{1A}$ and $R_{2A}$ (powered directly by the power source 21) may be relatively high resistance tracks and heating elements $R_{1B}$ and $R_{2B}$ (powered by the capacitor 22) may be relatively low resistance heater tracks. Advantageously, therefore, by providing dedicated heating elements $R_{1B}$, $R_{2B}$ that are powered by the capacitor 22, the capacitor 22 can be discharged to output power at the heaters 23 without the need to step-up the voltage from the capacitor 22 (which would require more complex and larger circuitry such as a boost converter). However, it will be appreciated that the resistances need not necessarily be different, and the resistances chosen will depend on the voltages provided by the power source 21 and the capacitor 22, and on the desired heat output at the heaters 23. In the example illustrated in Figure 9 two heaters 23 are used. The first heater comprises the heating elements $R_{1A}$ and $R_{1B}$, and the second heater comprises heating elements $R_{2A}$ and $R_{2B}$. Each of the heaters 23 may be of the type illustrated in Figure 9. For example, the first heater track 91 of each heater could be used to provide heating elements $R_{1A}$ and $R_{2A}$, and the second heater track 92 of each heater could be used to provide heating elements $R_{1B}$ and $R_{2B}$. However, it will be appreciated that the heater tracks need not necessarily be of the form illustrated in Figure 7, and that any other suitable shape and configuration of heater tracks 92 could alternatively be used.

A capacitor charging circuit 900 is provided for charging the capacitor 22 via a flow of current from the power source 21 that does not pass via the heater tracks. Advantageously, therefore, the capacitor 22 can be charged without outputting heat from the heaters (which would occur due to dissipative losses when the capacitor 22 is charged via the heater tracks). In other words, the charging of the capacitor 22 is independent of the flow of current through the heater tracks. In this example the capacitor charging circuit 900 comprises a DC-to-DC step-down converter (a 'Buck' converter) that has a controllable and variable voltage output to the capacitor 22. However, any other suitable capacitor charging circuit 900 could alternatively be used. The capacitor charging circuit 900 controls the voltage applied across the capacitor 22, and therefore the charging rate of the capacitor 22. The voltage across the capacitor 22 is monitored using a capacitor voltage monitoring sensor 901. The sensed voltage across the capacitor 22 is used as an input into the capacitor charging circuit 900 for use in controlling the charging of the capacitor 22, for example to prevent over-charging. The capacitor charging circuit 900 performs control to control the voltage across the capacitor 22 between zero and a maximum voltage. The maximum voltage will depend on the particular capacitor 22 in use. Advantageously, the capacitor charging circuit 900 enables on-demand charging of the capacitor 22, independent of the power output at the heaters 23.

When the power demand at the heaters 23 is greater than can be provided by the power source 21, the capacitor 22 discharges via at least one of heating element $R_{1B}$ or $R_{2B}$ under the control of the capacitor discharge controller 902. The capacitor discharge controller 902 controls the discharging of the capacitor 22 by controlling the state of the corresponding switch 909. When capacitor discharge controller 902 performs control to close the switch 909, and at least one of the switches 905 and 907 are also closed, then capacitor is connected to ground and will discharge via heating element $R_{1B}$ and/or $R_{2B}$ (the capacitor 22 will discharge via heating element $R_{1B}$ when switch 905 is closed, and will discharge via heating element $R_{2B}$ when switch 907 is closed). Advantageously, in this example a single capacitor discharge controller 902 controls the use of both the heating elements $R_{1B}$ and $R_{2B}$ through which the capacitor 22 discharges. In other words, a single capacitor discharge controller 902 controls whether the capacitor 22 is able to discharge to output heat at each of the heaters 23 (and therefore, when each heater 23 corresponds to one or more heating zones, for each of the heating zones). The first heater controller 903 and the second heater controller 904 do not need to know the state of the switch 909 through which the capacitor discharges (in other words, the first heater controller 903 and the second heater controller 904 do not need to know whether the circuitry is configured for discharging of the capacitor 22), because when the capacitor 22 is discharging the first heater controller 903 and the second heater controller 904 will simply register a reduced power demand at the respective heater, and perform corresponding control (e.g. by adjusting the duty cycle of the first and second heaters). The first heater controller 903 controls the state of switches 905 and 906 using a common control signal output by the first heater controller 903, and the second heater controller 904 controls the state of switches 707 and 708 using a common control signal output by the second heater controller 904. Beneficially, there is no need for independent control of switches 905 and 906, or for independent control of switches 907 and 908.

Whether current flows through the heater tracks $R_{1A}$, $R_{1B}$ of the first heater is controlled by the first heater controller 903, and whether current flows through the heater tracks $R_{2A}$, $R_{2B}$ of the second heater is controlled by the second heater controller 904. The heater controllers 903, 904 perform control of whether current flows via the respective heater tracks by controlling the state of the switches 906 to 908. The first heater controller 903 controls the state of the switch 906 to control whether current passes through heating element $R_{1A}$, and controls the state of the switch 905 to control whether current passes through heating element $R_{1B}$ (whether current passes through heating element $R_{1B}$ will also depend on the state of switch 909 that is under the control of the capacitor discharge controller). Similarly, the second heater controller 904 controls the state of the switch 908 to control whether current passes through heating element $R_{2A}$, and controls the state of the switch 907 to control whether current passes through heating element $R_{2B}$ (whether current passes through heating element $R_{2B}$ will also depend on the state of switch 909 that is under the control of the capacitor discharge controller). The heater controllers 903, 904 perform control based on the power demand at the respective heaters. Advantageously, the control of a pair of switches by each heater controller 903, 904 enables both of the heating elements of each heater to be controlled by a single controller, enabling particularly simple control of the duty cycles of the heaters 23 (whilst the capacitor discharge controller 902 performs additional control of whether the heating elements $R_{1B}$ and $R_{2B}$ are in use, depending on the power demand at each heater and the charge state of the capacitor).

The switches illustrated in Figure 9 may be, for example, field-effect transistors. However, any other suitable switches could alternatively be used.

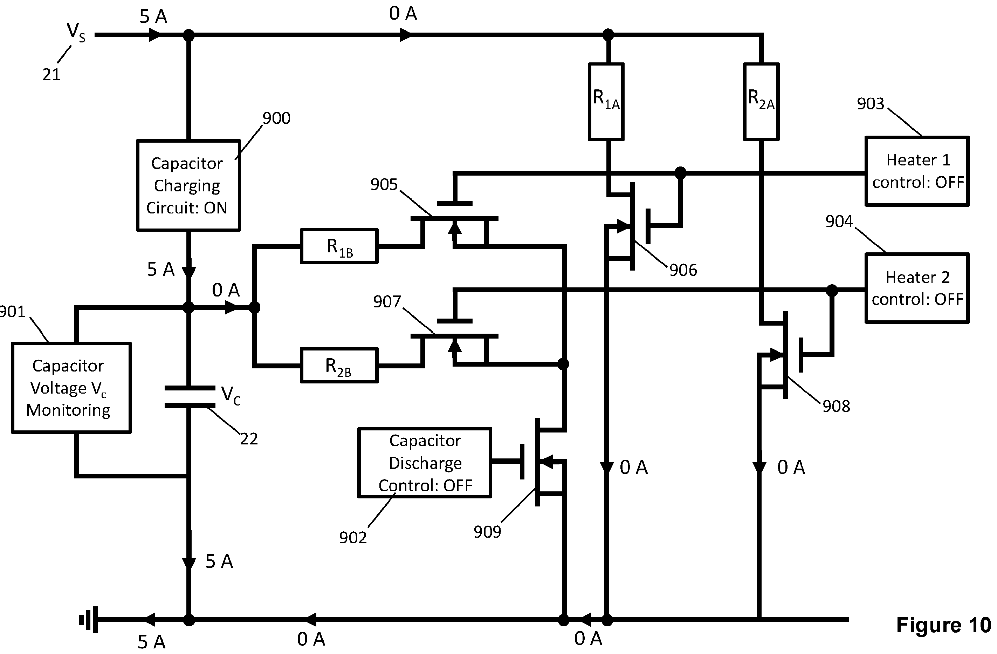

Operation of the circuitry illustrated in Figure 9 will now be described in more detail with reference to Figures 10 to 14. Figure 10 shows a state in which there is little or no power demand at the heaters, but the capacitor 22 is to be charged. Therefore, the first heater controller 903 performs control to open the switches 905 and 906, and the second heater controller 904 performs control to open the switches 907 and 908, so that current does not flow via the heater tracks of the first or second heater. The capacitor charging circuit 900 controls the current output to the capacitor 22 to charge the capacitor 22. The capacitor charging circuit 900 may perform control to output a constant current (in this example, a current of 5 A is illustrated).

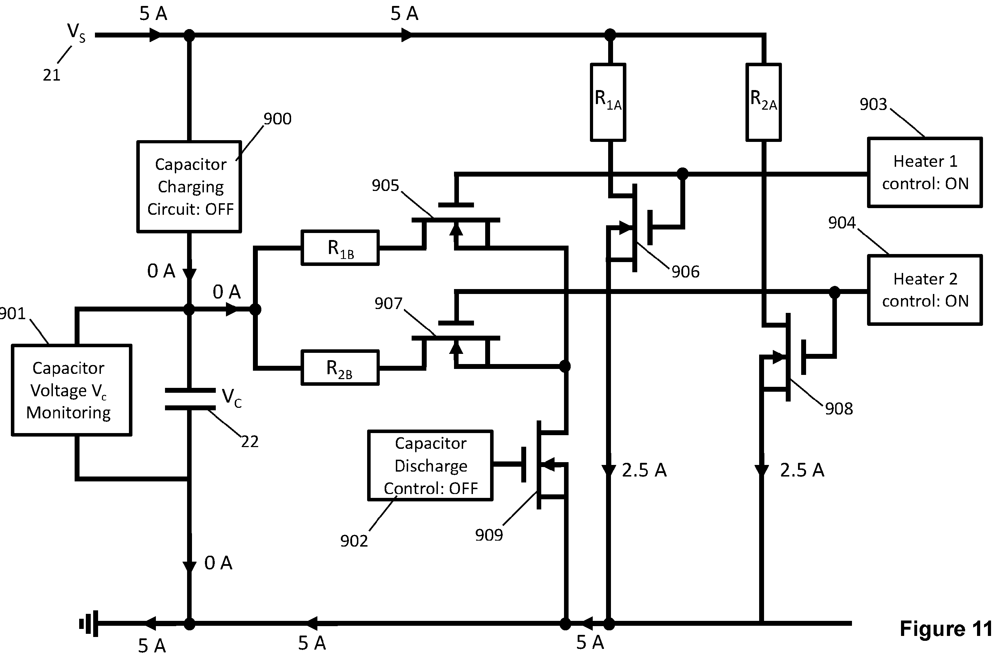

Figure 11 illustrates a state in which the power source 21 is used to provide power to the heaters 23, the capacitor 22 is not used to provide power to the heaters 23, and the capacitor 22 is not charging. The capacitor charging circuit 900 is not outputting power to charge the capacitor 22. The first heater controller 903 and the second heater controller 904 control the switches 905, 906, 907 and 908 to be closed, thereby completing a path to ground from the power source 21 via the heating elements $R_{1A}$ and $R_{2A}$. However, power is not output from the capacitor 22 via the heating elements $R_{1B}$ and $R_{2B}$ because switch 909 is controlled to be open by the capacitor discharge controller 902. Whilst in the example shown in Figure 11 the current flowing through the heating elements $R_{1A}$ and $R_{2A}$ is the same (because heating elements $R_{1A}$ and $R_{2A}$ have the same resistance), this need not necessarily be the case and the resistance of heating elements $R_{1A}$ and $R_{2A}$ could be different.

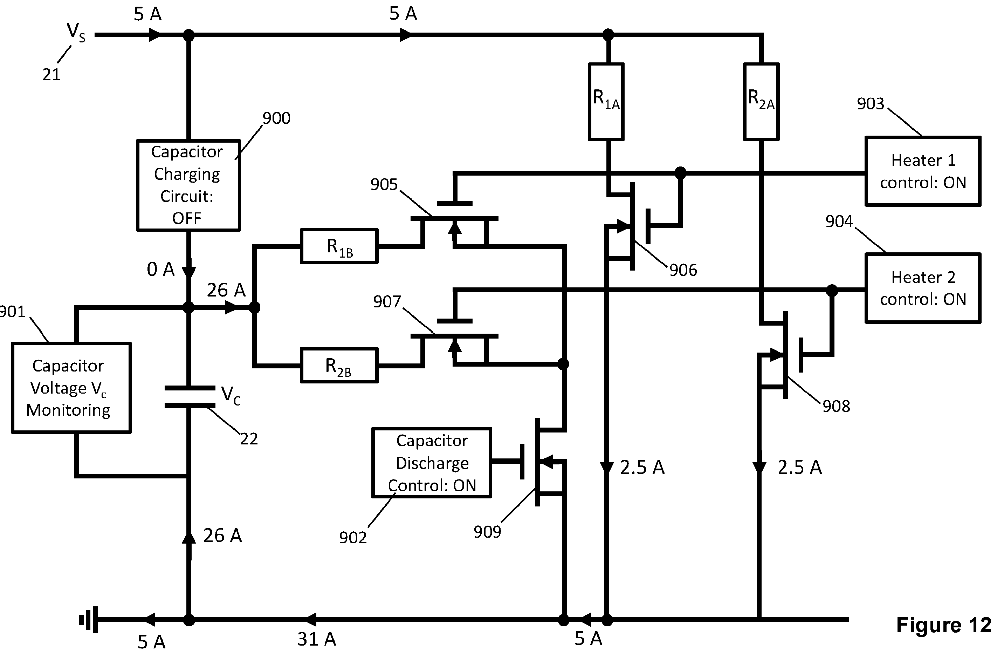

Figure 12 illustrates a state in which both the power source 21 and the capacitor 22 output power to the heaters 11. The configuration of the circuitry is the same as illustrated in Figure 11, except that the capacitor discharge controller 902 controls the switch 909 to be in the closed position, completing the path from the capacitor 22 to ground via the heating elements $R_{1B}$ and $R_{2B}$. The configuration illustrated in Figure 12 can advantageously be used when the power requirement at the heaters 23 is larger than can be provided directly by the power source 21. In both figures 11 and 12 the current draw from the power source is the same (a current of 5 A), but the total power output from the heaters 23 is higher in the example of Figure 12 due to the additional power output from the discharging of the capacitor 22.

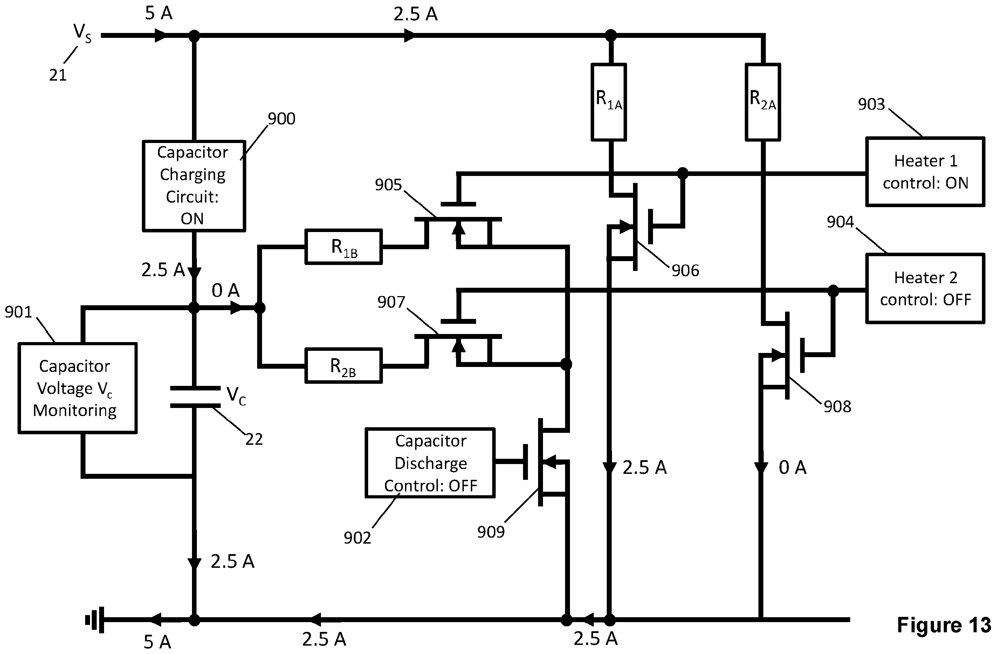

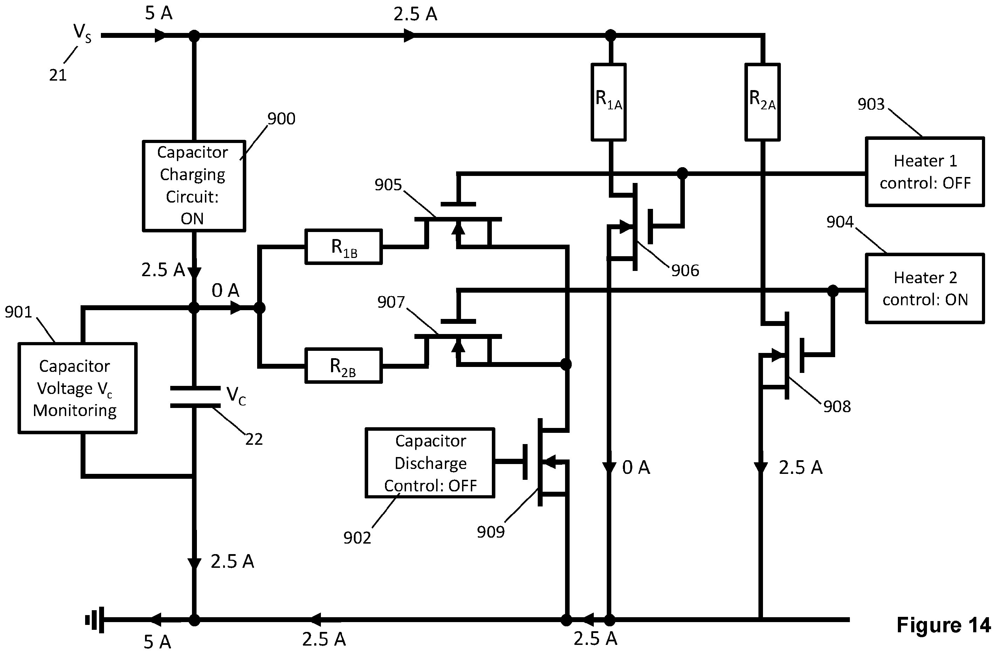

Figure 13 illustrates a state in which power is output using only one of the heaters 23, and the capacitor 22 is charging. As illustrated in Figure 13, the first heater controller controls the switches 905 and 906 to be in the closed configuration, thereby completing a path to ground from the power source 21 via heating element $R_{1A}$. However, power is not output from the capacitor 22 via the heating element $R_{1B}$ because switch 909 is controlled to be open by the capacitor discharge controller 902. Power is also not output by the second heater (corresponding to heating element $R_{2A}$ and $R_{2B}$) because the second heater controller controls switches 907 and 908 to be in the open configuration. The capacitor charging circuit 900 is controlling the charging of the capacitor 22. In this example, 2.5 A flows through the first heater (through heating element $R_{1A}$), and 2.5 A flows through the capacitor charging circuit. Therefore, the total flow of current from the power source is 5 A, which is the same total current as illustrated in Figure 12 (the voltage of the power source 21 could be for example 40 V, in which case the total power draw from the power source 21 illustrated in all of Figures 10 to and 14 would be 200 W, but the power source 21 could be configured to output any other suitable voltage). Figure 14 shows a state similar to that illustrated in Figure 13, except that the circuitry is configured for heat output via the second heater rather than the first heater (switch 908 is closed rather than switch 906), and the total flow of current from the power source is also 5 A. Therefore, advantageously, in each of the states illustrated in figures 12 to 14 the power demand from the power source 21 is constant. However, it will be appreciated that when the capacitor is fully charged and there is no power demand at the heaters 23, then power output from the power source 21 can be zero (or less than the constant power demand when the power demand at the heaters 23 is sufficiently low). It will also be appreciated that the values of the currents may be different from those illustrated in figures 10 to 14, and that the actual currents will depend on the power requirements of the heaters 23, the resistances of the heater tracks and the voltages of the power source 21 and the capacitor 22.

The heater controllers 903, 904, the capacitor discharge controller 902, and capacitor charging circuit 900 can perform control to switch the circuitry between the states illustrated in figures 10 to 14 in a cycle, depending on the power demand at the heaters and the charge state of the capacitor 22. The power delivered to the heating elements and the capacitor 22 may be interleaved in the time domain. For example, when the capacitor is to be charged, the circuitry may initially be in the state illustrated in Figure 12 (power output to both heaters and the capacitor 22 is not charging), transition to the state illustrated in Figure 13 (power output to the first heater and the capacitor 22 is charging), return to the state illustrated in Figure 12, transition to the state illustrated in Figure 14 (power output to the second heater and the capacitor is charging), and then return to the state illustrated in Figure 12 to complete the cycle. Each of the states need not necessarily be active for the same amount of time. For example, a duty cycle could be used in which the capacitor and the first and second heaters each receive the same amount of power, or the duty cycle could be modified so that more power is output to the heaters 23 than the capacitor 22 (for example, based on the power demand and the heaters being higher). Advantageously, therefore, the power distribution between the capacitor 22 and the heaters 23 (and between the first and second heaters, by control of the duty cycles) can be controlled based on the power demand at the heaters (and based on the charge state of the capacitor 22; when the capacitor 22 is fully charged power need not be output to the capacitor 22 by the capacitor charging circuit 900). Beneficially, therefore, when the power demand at the heaters 23 can be met by the power source 21, any additional power available from the power source 21 can be used to charge the capacitor 22. Control is performed to maintain a constant, or near constant, power draw from the power source 21. When the power demand at the heaters 23 is lower than target power for the power source 21, the additional power output can be used to charge the capacitor 22. If the power demand at the heaters 23 exceeds the power available from the power source 21, then the configuration illustrated in Figure 12 can be used, in which the capacitor 22 discharges to provide additional power output at the heaters 23 (by discharging via heating element $R_{1B}$ and/or heating element $R_{2B}$).

The frequency at which the power output is switched between the capacitor 22, the first heater and the second heater may be any suitable frequency, but is typically fast compared to the frequency of the periodic power demand at the heater 23 caused by the loading of hair.

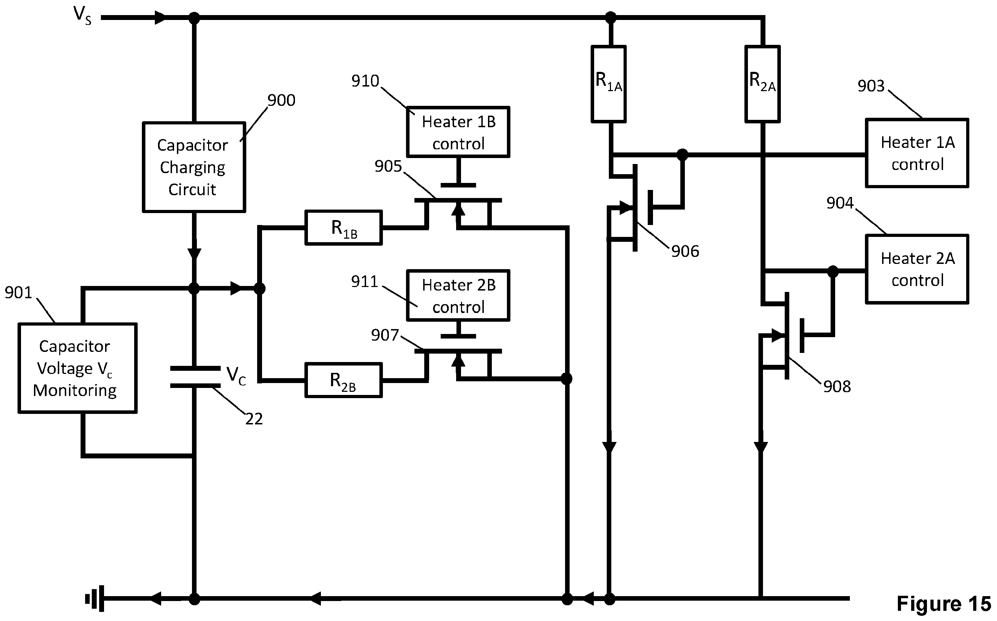

Whilst in the examples illustrated in Figures 9 to 14 a capacitor discharge controller is provided for controlling the discharging of the capacitor via all of the heaters 23, and the overall operation of each heater 23 is controlled by a separate respective controller 903, 904, this need not necessarily by the case. Figure 15 shows an alternative in which control of the activation of each heater track is performed independently using a respective dedicated controller and a dedicated switch. Whilst the configuration illustrated in Figure 15 uses four controllers 903, 904, 910 and 911 (in contrast, the examples illustrated in Figures 9 to 14 beneficially only use three controllers, reducing the complexity of the circuitry), the configuration of Figure 15 enables control of heating element $R_{1B}$ independently of heating element $R_{2B}$. In other words, the configuration of Figure 15 enables the additional power from the capacitor 22 to be selectively output at a particular heater 23 when both heaters 23 are on. This could be used, for example, when the power demand at one of the heaters 23 exceeds the maximum power output of the power source 21, but the power demand at the other heater 23 does not.

Whilst Figures 9 to 15 illustrate examples in which two heaters are used (a first heater comprising heating elements $R_{1A}$ and $R_{1B}$, and a second heater comprising heater elements $R_{2A}$ and $R_{2B}$), this need not necessarily be the case. Alternatively, only one heater could be provided (for example, only heating elements $R_{1A}$ and $R_{1B}$ may be provided). In a further alternative three or more heaters could be used.

### Multi-Zone Heaters

Each heater 23 may comprise a plurality of independently controllable heating zones. In this case, each heating zone has a corresponding pair of heater tracks (for example, as illustrated in Figure 7). Heat output from the heater tracks heats the heating zone. In the example shown in Figure 7, the heating zone is the area defined by the outer rectangular area 700. The heating zones could be, for example, a plurality of adjacent heating zones that are arranged along the length of the heater. Independently controllable heating zones are described, for example, in the earlier application WO 2012/028862.

### Heater Power Control - *Illustrative Examples*

Examples of how the overall power output of the heaters 23 may be controlled will now be described.

#### Temperature Measurement

The device may be configured to determine a temperature (or a change in temperature over time) of the hair 17, or a temperature of the heater, as heat is applied to the hair 17 using the temperature sensor(s) 26. The temperature sensor 26 may be configured to measure the temperature through direct contact measurements using (for example) a thermistor, negative temperature coefficient (NTC) sensor, or a thermocouple. Alternatively, or additionally, non-contact measurements (e.g. using an infrared sensor) could be used to measure the temperature. Alternatively, the temperature may be obtained by measuring a current and voltage of each heater to determine the heater resistance (which is proportional to the temperature of the heater). This may be achieved, for example, using a circuit comprising a shunt resistor and an operational amplifier, with an analogue to digital converter configured to convert and output the voltage across the shunt resistor to the controller. More generally, the device 10 may comprise any suitable sensor or circuitry for measuring the temperature.

#### Moisture Level

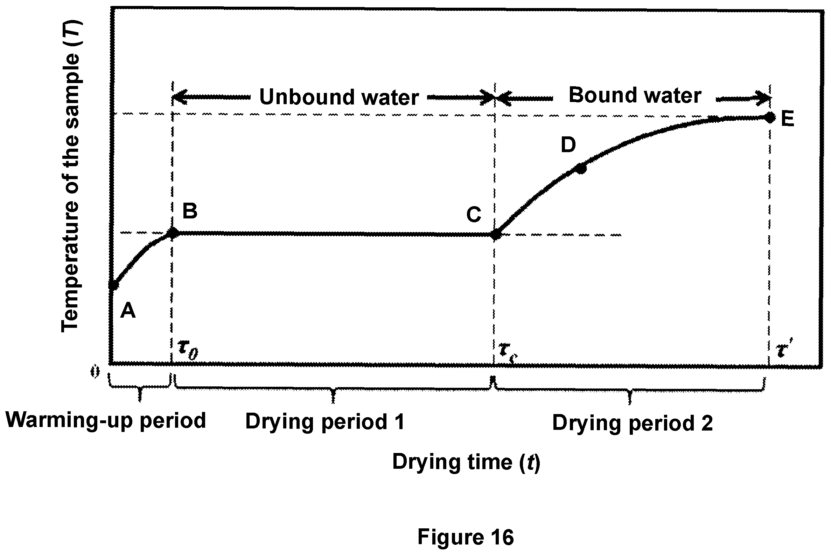

Figure 16 shows a graph of hair temperature against drying time as heat is transferred to the hair 17. The device 10 may be configured to control the power output of the heater 23 based on the moisture level of the user's hair 17. As illustrated in Figure 16, the hair goes through a warming-up period, and then first and second drying periods, as described below. The first drying period corresponds primarily to the removal of unbound water, and the second drying period corresponds primarily to the removal of bound water. By measuring the change in temperature of the hair 17 over time as heat is transferred to the hair 17, using the temperature sensor 26, the amount of unbound water and bound water in the hair (which corresponds to a moisture level of the hair 17) can be determined by the controller 29.

The following phases are illustrated in Figure 16:

• "Warming-up period": In this phase (point A to point B) the device 10 transfers heat to the hair using the heater 23, raising the temperature of the hair 17 to that of the drying period (where a phase change of the liquid occurs). In the warming-up period, when a hair straightener of the type illustrated in Figure 1a is used to transfer heat to the hair 17, the hair contacting surface of the heater 23 typically operate below a temperature of approximately 100°C to 135°C (e.g. 120°C) in order to avoid water cavitation (so-called 'sizzle') occurring. The warming up period can be identified by the controller 29 using the output of the temperature sensor 26, which senses the increase in temperature of the hair 17 after the device 10 initially starts to transfer heat to the hair.

• "Drying period 1": In this phase (point B to point C) the device 10 continues to transfer heat to the water on the hair 17, but the temperature of the hair 17 remains relatively constant. This is due to evaporation of the unbound water which limits the rise in temperature. This first drying period can be identified by the controller 29 using the output of the temperature sensor 26, which senses the constant temperature of the hair 17 after the initial warming-up period.

• "Drying period 2": In this phase (point C to point E) the unbound water has evaporated, and bound water on the hair starts to evaporate and be driven off from within the hair fibre. In this phase, the temperature of the hair 17 increases from an initial temperature (corresponding to the equilibrium temperature during drying period 1) towards a final temperature (at point E). This phase can be identified by the controller 29 using the output of the temperature sensor 26, which senses the increase in temperature of the hair above the constant temperature that is maintained during drying period 1. In other words, the beginning of this phase can be identified by identifying the increase in temperature that begins at the 'elbow' at point C.

By monitoring the temperature of the hair over time, the moisture level of the hair 17 can therefore be determined or estimated during the styling/heating process, as used to control the power output of the heater 23. When the amount of hair 17 received by the device 10 is known (or estimated), the moisture level of the hair 17 at point B can be determined based on the heat output from the heater 23 and the time taken to heat the hair 17 from the temperature at point A to the temperature at point B. The moisture level of the hair 17 in drying period 1 (between points B and C) can be determined based on the heat transferred from device 10 to the hair 17 (which can be used to calculate the amount of evaporation of the unbound water), the determined or estimated moisture level of the hair at point B, and the amount of time that has elapsed since the beginning of drying period 1. Similarly, the moisture level of the hair 17 in drying period 2 can be determined based on the heat transferred from device 10 to the hair 17, the determined or estimated moisture level of the hair 17 at point C (which is known, since point C corresponds to the point at which all of the unbound water has been driver off from the hair 17 and the removal of bound water begins), and the amount of time that has elapsed since the beginning of drying period 2. A particular moisture level can therefore be achieved by controlling the heater 23 to heat the hair 17 for a corresponding amount of time after the 'elbow' at point C has been detected, at a particular power output of the heater 23. A table mapping the moisture level of the hair to a time elapsed after point C of the graph could be determined experimentally in advance, and stored in the 31 memory of the device 10. Alternatively, an experimentally determined equation could be stored in the memory 31.

The device 10 may be configured to measure a thermal load on one or more components of the device 10 to determine the moisture level of the hair 17, and to control the power output of the heater 23 based on the determined moisture level. The amount of energy required to heat hair is dependent on the moisture content remaining within the hair. For a given tress of hair that is heated by the device 10, the thermal load is correlated with the temperature and water content of that tress of hair. Therefore, by measuring the thermal load, the moisture level of the hair 17 can be determined (estimated) via a suitable look up table or calculation that is determined in advance and that relates measured thermal loads to moisture levels of the hair. For example, for a hair straightener of the type illustrated in Figure 1a, the moisture level of the hair can be determined based on a thermal load on the hair contacting surface of the heater 23.

The thermal load, and therefore the determination of the moisture level of the hair, depends on the amount of hair being heated. The moisture level of the hair can be determined (estimated) via a suitable look up table or calculation based on an estimate of the typical amount of hair received by the device 10 in normal use. Alternatively, a pair of sequential heated plates can be used to increase the accuracy of the determination of the moisture level. As the user pulls the device 10 across the hair, the hair passes over a first plate of the sequential heated plates and then passes over a second plate of the sequential heated plates. The hair is therefore first heated by the first heater plate and is then heated by the second heater plate. The thermal load on the first heater plate is greater than the thermal load on the second heater plate, due to the removal of some of the water from the hair at the first heater plate before the hair passes over the second heater plate (i.e. the moisture level of the hair at the first heater plate is greater than the moisture level of the hair at the second heater plate). Advantageously, since the first and second plates both receive the same amount of hair, this differential thermal load can be used to determine the moisture level of the hair in a way that is independent of the amount of hair being heated.

More generally, the device 10 may comprise a plurality of temperature sensors for measuring a temperature (or sensors for measuring a thermal load) at two or more regions of a heatable surface (or heatable surfaces) over which the hair passes sequentially (i.e. a tress of the hair first passes over a first region of the two or more regions, and then passes over a second region of the two or more regions). The device may be configured to determine a moisture level of the hair 17 based on the measured temperatures (or measured thermal loads), for example based on a differential temperature or thermal load between the regions. The determination of the moisture level using the measured temperatures or measured thermal loads could be combined with measurements of the moisture level of the user's hair 17 obtained using other methods, to increase the accuracy of the determination of the moisture level. The determined moisture level can then be used to control the power output of the heater 23.

Instead of using sequential heating plates to remove the effects caused by the user using hair tresses of different volumes, the device 10 may comprise a sensor for sensing the amount of hair in the tress that is being heated by the device, to enable a more accurate determination of the moisture level of the hair based on the thermal load.

### Modifications and alternatives

Detailed embodiments and some possible alternatives have been described above. As those skilled in the art will appreciate, a number of modifications and further alternatives can be made to the above embodiments whilst still benefiting from the inventions embodied therein. It will therefore be understood that the invention is not limited to the described embodiments and encompasses modifications apparent to those skilled in the art lying within the scope of the claims appended hereto.

The invention has been described above with reference to a device 10 comprising a capacitor or 'supercapacitor' 22. It will be appreciated that a capacitor having any suitable capacitance may be used. The capacitor 22 illustrated in figures 2, 6 and 8 could also conceivably be replaced with any other suitable means for storing electrical energy (which may also be referred to as 'energy storage means' or an 'energy storage device'), such as a battery (e.g. a high-discharge Li-ion cell) having a sufficiently high-power output (which could then be charged by the power source 21, and output power to the heater 23, as described above for the capacitor 22).

In any of the examples described above, the power source 21 may be a Li-ion cell, a solid-state cell, a lithium-sulphur cell, a lithium-air cell, or any other suitable type of power source. The capacitor may be an electric double layer capacitor, a hybrid Li-ion capacitor, or any other suitable type of capacitor. Combinations of power sources 21 and capacitors 22 (or alternatively, high power cells) that could be used include, for example: a Li-ion cell and an electric double layer capacitor; a Li-ion cell and a hybrid Li-Ion capacitor; a solid state cell and an electric double layer capacitor; and lithium-sulphur cell and an electric double layer capacitor; a lithium-air cell and an electric double layer capacitor; a solid state cell and a hybrid Li-ion capacitor; a lithium-sulphur cell and a hybrid Li-ion capacitor; a lithium-air cell and a hybrid Li-ion capacitor; a solid-state cell and a high discharge Li-ion cell; a lithium-sulphur cell and a high discharge Li-ion cell; and a lithium-air cell and a high discharge Li-ion cell. Any other suitable combination of power source 21 and capacitor 22 (or other high-power source) may be used. The power source 21 may be a power supply unit that receives power from an AC mains power supply, and converts it to a DC power supply at a suitable voltage for providing power to the heater. In this case, the capacitor 22 could be provided in a power supply unit (which could be provided inside a plug, or inside a separate housing) that is situated in between a socket that provides the AC mains power and the handheld device 10, thereby reducing the size of the circuitry needed inside the device 10.

In the above-described examples the device 10 may comprise a single heater 23, or may alternatively comprise two or more heaters 23. More generally, the device 10 may comprise any suitable means for transferring heat to the hair 17, such as any suitable conductive heater, thick film printed heater, steam heater, or radiative heater. The device illustrated in Figure 1a uses heated plates that are typically used for straightening the user's hair. Alternatively, instead of having generally flat hair-contacting plates, heaters 23 having any other suitable type of hair-contacting surface may be used. For example, ribbed heaters may be used to crimp the hair 17 during a styling process. Similarly, the heating surface may be defined by a cylindrical heater as typically used in a curling tong. In some examples, there need not necessarily be a hair-contacting surface at all (e.g. when a stream of heated air is used to heat the hair 17).

It will be appreciated that the device 10 need not necessarily comprise a temperature sensor 26 for measuring the temperature of the hair 17 or for measuring the temperature of a part of the device 10. For example, the device 10 could heat the hair 17 according to a predetermined operating profile. The predetermined operating profile (which may comprise, for example, a heater power output, a duration for heating the hair, or any other suitable operating parameter) could be stored in the memory 29 of the device 10.

Advantages of the invention may be obtained for any suitable device 10 having a battery or other type of power source 21 (e.g. a PSU) for which there is a time-dependent (e.g. periodic or intermittent) power demand. For example, the device 10 may be a vehicle (e.g. an electric car), and the time-dependent power demand may be provided by a motor of the vehicle, in which case a power source may charge a capacitor via the motor. As described above, the present invention allows batteries and other power sources having a lower maximum power output to be used, by smoothing out the power required from the power source.

The device 10 may be partially or entirely formed of a unitary structure, e.g. by 3D printing.

Throughout the description and claims of this specification, the words "comprise" and "contain" and variations of the words, for example "comprising" and "containing", means "including but not limited to", and is not intended to (and does not) exclude other components, integers or steps.

**Claims**

1. A portable apparatus (10) comprising:

    an electrical component that provides, in use, a variable power demand;
    energy storage means;
    a power source (21); and
    control circuitry configurable between:

       a first configuration in which the power source (21) outputs power to the electrical component and to the energy storage means via the electrical component; and
       a second configuration in which the power source (21) outputs power to the electrical component and the energy storage means outputs power to the electrical component;

    wherein the electrical component comprises a heater (23).

2. The portable apparatus (10) according to claim 1, wherein the control circuitry is configured in the first configuration or the second configuration based on a magnitude of the variable power demand.

3. The portable apparatus (10) according to claim 2,

    wherein the control circuitry is configured in the first configuration or the second configuration based on a magnitude of the variable power demand and a threshold power output of the power source (21); and

    wherein the control circuitry is configured in the second configuration when the variable power demand is greater than the threshold power output the power source (21).

4. The portable apparatus (10) according to claim 3, wherein the threshold power output is based on an available power output of the power source (21).

5. The portable apparatus (10) according to any preceding claim, wherein the variable power demand is a periodic power demand.

6. The portable apparatus (10) according to any preceding claim, wherein the portable apparatus (10) is a hair styling apparatus.

7. The portable apparatus (10) according to any preceding claim, wherein the energy storage means comprises a capacitor (22).

8. The portable apparatus (10) according to claim 7,

    wherein the electrical component comprises a first part that provides, in use, a first variable power demand, and a second part that provides, in use, a second variable power demand;
    wherein the power source (21) is operable to charge the capacitor (22) via the first part; and
    wherein the power source (21) and the capacitor (22) are operable to output power to the second part.

9. The portable apparatus (10) according to claim 7 or 8, wherein the power source (21) is operable to charge the capacitor (22) via at least one heater electrode of the heater (23).

10. The portable apparatus (10) according to claim 9, wherein the at least one heater electrode comprises a first heater electrode and a second heater electrode;

    wherein the power source (21) is operable to charge the capacitor (22) via the first heater electrode; and
    wherein the capacitor (22) is operable to discharge via the second heater electrode.

11. The portable apparatus (10) according to claim 10, wherein the heater (23) has one or more heating zones, each heating zone comprising the first heater electrode and the second heater electrode for heating the heating zone.

12. The portable apparatus (10) according to claim 11, wherein the heater (23) comprises a heating surface for heating hair that contacts the heating surface, and each heating zone comprises a respective portion of the heating surface.

13. The portable apparatus (10) according to claim 12, wherein the first heater electrode and the second heater electrode each heat the portion of the heating surface of the heating zone.

14. The portable apparatus (10) according to any preceding claim, wherein the control circuity is further configured to control the power output to the energy storage means based on a charge state of the energy storage means.

15. A method for controlling power delivery in a portable apparatus (10), the method comprising:

> providing an apparatus according to any one of claims 1 to 14; and
> controlling the delivery of power from the power source (21) and the energy storage means.

**Patentansprüche**

1. Tragbare Vorrichtung (10), die Folgendes umfasst:

> eine elektrische Komponente mit einem variablen Strombedarf beim Gebrauch;
> Energiespeichermittel;
> eine Stromquelle (21); und
> Steuerschaltung, konfigurierbar zwischen:
>
>> einer ersten Konfiguration, in der die Stromquelle (21) Strom an die elektrische Komponente und über die elektrische Komponente an das Energiespeichermittel ausgibt; und
>> einer zweiten Konfiguration, in der die Stromquelle (21) Strom an die elektrische Komponente ausgibt und das Energiespeichermittel Strom an die elektrische Komponente ausgibt;
>
> wobei die elektrische Komponente eine Heizung (23) umfasst.

2. Tragbare Vorrichtung (10) nach Anspruch 1, wobei die Steuerschaltung auf der Basis einer Größe des variablen Strombedarfs in der ersten Konfiguration oder der zweiten Konfiguration konfiguriert ist.

3. Tragbare Vorrichtung (10) nach Anspruch 2, wobei die Steuerschaltung auf der Basis einer Größe des variablen Strombedarfs und einer Schwellenstromausgabe der Stromquelle (21) in der ersten Konfiguration oder der zweiten Konfiguration konfiguriert ist; und

wobei die Steuerschaltung in der zweiten Konfiguration konfiguriert ist, wenn der variable Strombedarf größer ist als die Schwellenstromausgabe der Stromquelle (21).

4. Tragbare Vorrichtung (10) nach Anspruch 3, wobei die Schwellenstromausgabe auf einer verfügbaren Stromausgabe der Stromquelle (21) basiert.

5. Tragbare Vorrichtung (10) nach einem vorherigen Anspruch, wobei der variable Strombedarf ein periodischer Strombedarf ist.

6. Tragbare Vorrichtung (10) nach einem vorherigen Anspruch, wobei die tragbare Vorrichtung (10) eine Haarstyling-Vorrichtung ist.

7. Tragbare Vorrichtung (10) nach einem vorherigen Anspruch, wobei das Energiespeichermittel einen Kondensator (22) umfasst.

8. Tragbare Vorrichtung (10) nach Anspruch 7,

> wobei die elektrische Komponente einen ersten Teil mit einem ersten variablen Strombedarf beim Gebrauch und einen zweiten Teil mit einem zweiten variablen Strombedarf beim Gebrauch umfasst;
> wobei die Stromquelle (21) die Aufgabe hat, den Kondensator (22) über den ersten Teil zu laden; und
> wobei die Stromquelle (21) und der Kondensator (22) die Aufgabe haben, Strom an den zweiten Teil auszugeben.

9. Tragbare Vorrichtung (10) nach Anspruch 7 oder 8, wobei die Stromquelle (21) die Aufgabe hat, den Kondensator (22) über mindestens eine Heizelektrode der Heizung (23) zu laden.

10. Tragbare Vorrichtung (10) nach Anspruch 9, wobei die mindestens eine Heizelektrode eine erste Heizelektrode und eine zweite Heizelektrode umfasst;

> wobei die Stromquelle (21) die Aufgabe hat, den Kondensator (22) über die erste Heizelektrode zu laden; und
> wobei der Kondensator (22) die Aufgabe hat, sich über die zweite Heizelektrode zu entladen.

11. Tragbare Vorrichtung (10) nach Anspruch 10, wobei die Heizung (23) eine oder mehrere Heizzonen hat, wobei jede Heizzone die erste Heizelektrode und die zweite Heizelektrode zum Erhitzen der Heizzone umfasst.

12. Tragbare Vorrichtung (10) nach Anspruch 11, wobei die Heizung (23) eine Heizfläche zum Erhitzen von mit der Heizfläche in Kontakt kommenden Haaren umfasst und jede Heizzone einen jeweiligen Abschnitt der Heizfläche umfasst.

**13.** Tragbare Vorrichtung (10) nach Anspruch 12, wobei die erste Heizelektrode und die zweite Heizelektrode jeweils den Abschnitt der Heizfläche der Heizzone erhitzen.

**14.** Tragbare Vorrichtung (10) nach einem vorherigen Anspruch, wobei die Steuerschaltung ferner zum Steuern der Stromausgabe an das Energiespeichermittel auf der Basis eines Ladezustands des Energiespeichermittels konfiguriert ist.

**15.** Verfahren zum Steuern der Stromabgabe in einer tragbaren Vorrichtung (10), wobei das Verfahren Folgendes umfasst:

Bereitstellen einer Vorrichtung nach einem der Ansprüche 1 bis 14; und
Steuern der Abgabe von Strom von der Stromquelle (21) und dem Energiespeichermittel.

**Revendications**

**1.** Appareil portable (10), comprenant :

un composant électrique qui, lors de l'utilisation, fournit une demande d'alimentation variable ;
un moyen de stockage d'énergie ;
une source d'alimentation (21) ; et
une circuiterie de commande configurable entre :

une première configuration dans laquelle la source d'alimentation (21) alimente en sortie le composant électrique et le moyen de stockage d'énergie par l'intermédiaire du composant électrique ; et
une seconde configuration dans laquelle la source d'alimentation (21) alimente en sortie le composant électrique, et le moyen de stockage d'énergie alimente en sortie le composant électrique ;

le composant électrique comprenant un dispositif de chauffage (23).

**2.** Appareil portable (10) selon la revendication 1, la circuiterie de commande étant configurée dans la première configuration ou la seconde configuration sur la base d'une amplitude de la demande d'alimentation variable.

**3.** Appareil portable (10) selon la revendication 2,

la circuiterie de commande étant configurée dans la première configuration ou la seconde configuration sur la base d'une amplitude de la demande d'alimentation variable et d'un seuil d'alimentation de sortie de la source d'alimentation (21) ; et
la circuiterie de commande étant configurée dans la seconde configuration lorsque la demande d'alimentation variable est supérieure au seuil d'alimentation de sortie de la source d'alimentation (21).

**4.** Appareil portable (10) selon la revendication 3, le seuil de puissance de sortie étant basé sur une alimentation de sortie disponible de la source d'alimentation (21).

**5.** Appareil portable (10) selon l'une quelconque des revendications précédentes, la demande d'alimentation variable étant une demande d'alimentation périodique.

**6.** Appareil portable (10) selon l'une quelconque des revendications précédentes, l'appareil portable (10) étant un appareil de coiffure.

**7.** Appareil portable (10) selon l'une quelconque des revendications précédentes, le moyen de stockage d'énergie comprenant un condensateur (22).

**8.** Appareil portable (10) selon la revendication 7,

le composant électrique comprenant une première partie qui, lors de l'utilisation, fournit une première demande d'alimentation variable et une seconde partie qui, lors de l'utilisation, fournit une seconde demande d'alimentation variable ;
la source d'alimentation (21) étant fonctionnelle pour recharger le condensateur (22) par l'intermédiaire de la première partie ; et
la source d'alimentation (21) et le condensateur (22) étant fonctionnels pour alimenter en sortie la seconde partie.

**9.** Appareil portable (10) selon la revendication 7 ou 8, la source d'alimentation (21) étant fonctionnelle pour recharger le condensateur (22) par l'intermédiaire d'au moins une électrode chauffante du dispositif de chauffage (23).

**10.** Appareil portable (10) selon la revendication 9, l'au moins une électrode chauffante comprenant une première électrode chauffante et une seconde électrode chauffante ;

la source d'alimentation (21) étant fonctionnelle pour recharger le condensateur (22) par l'intermédiaire de la première électrode chauffante ; et le condensateur (22) étant fonctionnel pour se décharger par l'intermédiaire de la seconde électrode chauffante.

11. Appareil portable (10) selon la revendication 10, le dispositif de chauffage (23) comportant une ou plusieurs zones chauffantes, chaque zone chauffante comprenant la première électrode chauffante et la seconde électrode chauffante pour chauffer la zone chauffante.

12. Appareil portable (10) selon la revendication 11, le dispositif de chauffage (23) comprenant une surface chauffante pour chauffer les cheveux qui entrent en contact avec la surface chauffante, et chaque zone chauffante comprenant une partie respective de la surface chauffante.

13. Appareil portable (10) selon la revendication 12, la première électrode chauffante et la seconde électrode chauffante chauffant chacune la partie de la surface chauffante de la zone chauffante.

14. Appareil portable (10) selon l'une quelconque des revendications précédentes, la circuiterie de commande étant en outre configurée pour commander l'alimentation délivrée en sortie au moyen de stockage d'énergie sur la base d'un état de recharge du moyen de stockage d'énergie.

15. Procédé de commande de distribution d'alimentation dans un appareil portable (10), le procédé consistant à :

   fournir un appareil selon l'une quelconque des revendications 1 à 14 ; et
   commander la distribution d'alimentation par la source d'alimentation (21) et le moyen de stockage d'énergie.

**Figure 1a**

**Figure 1b**

EP 4 583 740 B1

**Figure 2**

EP 4 583 740 B1

**Figure 3**

Figure 4a

25

**Figure 4b**

Figure 4c

Figure 4d

**Figure 4e**

EP 4 583 740 B1

| Power Configuration | Maximum Discharge Current | Maximum Peak Power (fully charged) | Capacity |
|---|---|---|---|
| 2x High-Range | 30 A | 200 W | 22 Wh |
| 2x Mid-Range | 10 A | 85 W | 25 Wh |
| 2x Mid-Range and capacitor | 20 A | 100 W | 25 Wh |

**Figure 5**

Figure 6a

**Figure 6b**

EP 4 583 740 B1

**Figure 7**

Figure 8

EP 4 583 740 B1

Figure 9

Figure 10

EP 4 583 740 B1

Figure 11

EP 4 583 740 B1

Figure 12

$V_S$

21

5 A

5 A

900

Capacitor
Charging
Circuit:
OFF

$R_{1A}$

$R_{2A}$

903

Heater 1
control: ON

904

Heater 2
control: ON

0 A

905

907

906

908

901

Capacitor
Voltage $V_c$
Monitoring

26 A

$R_{1B}$

$R_{2B}$

$V_C$

22

902

Capacitor
Discharge
Control: ON

909

2.5 A

2.5 A

26 A

5 A

31 A

5 A

38

EP 4 583 740 B1

Figure 13

$V_S$

21

5 A

2.5 A

900

Capacitor
Charging
Circuit:
ON

2.5 A

0 A

901

Capacitor
Voltage $V_c$
Monitoring

$V_C$

22

2.5 A

5 A

$R_{1B}$

$R_{2B}$

905

907

Capacitor
Discharge
Control: OFF

902

909

2.5 A

2.5 A

$R_{1A}$

$R_{2A}$

906

2.5 A

903

Heater 1
control: ON

904

Heater 2
control: OFF

908

0 A

EP 4 583 740 B1

39

Figure 14

Figure 15

Figure 16

EP 4 583 740 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021122801 A
- WO 2012028862 A